(19) Europäisches Patentamt / European Patent Office / Office européen des brevets

(11) **EP 4 704 460 A1**

(12) **EUROPEAN PATENT APPLICATION**
published in accordance with Art. 153(4) EPC

(43) Date of publication:
**04.03.2026 Bulletin 2026/10**

(21) Application number: **24795850.7**

(22) Date of filing: **11.04.2024**

(51) International Patent Classification (IPC):
**H04W 24/02** (2009.01)

(52) Cooperative Patent Classification (CPC):
**H04L 5/00; H04W 24/02; H04W 24/10**

(86) International application number:
**PCT/CN2024/087184**

(87) International publication number:
**WO 2024/222469 (31.10.2024 Gazette 2024/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.04.2023 CN 202310477293**

(71) Applicant: **Datang Mobile Communications Equipment Co., Ltd.**
**Beijing 100085 (CN)**

(72) Inventors:
• ZUO, Jun
 **Beijing 100085 (CN)**
• GAO, Qiubin
 **Beijing 100085 (CN)**
• WANG, Da
 **Beijing 100085 (CN)**
• FEI, Yongqiang
 **Beijing 100085 (CN)**

(74) Representative: **Ipsilon**
 **12, avenue d'Italie**
 **75013 Paris (FR)**

(54) **INFORMATION TRANSMISSION METHOD AND APPARATUS, AND STORAGE MEDIUM**

(57) Disclosed in the present application are an information transmission method and apparatus, and a storage medium. The method comprises: acquiring a reporting configuration message which is sent by a network device; and sending to the network device an index associated with some reference signal resources, mapping a measurement result according to a mapping sequence, and sending the mapped measurement result; or sending to the network device a first index and/or a second index associated with K reference signal resources; or sending to the network device one or more reference signal resource set patterns or a combined index.

FIG. 1

**Description**

CROSS-REFERENCES TO RELATED APPLICATIONS

The present application claims priority to Chinese application No. 202310477293.1 filed on April 27, 2023, entitled "Information Transmission Method and Apparatus, and Storage Medium", which is hereby incorporated by reference in its entirety.

FIELD

The present application relates to the field of communication, and in particular, to methods and apparatuses for information transmission, and a storage medium.

BACKGROUND

In a new radio (NR) system, to counteract path loss in high-frequency scenarios, a transmitter and a receiver obtain aligned beam pairs through beam management (BM) to improve beamforming gain. In a downlink beam management procedure, a base station is required to cyclically transmit a transmission beam (Tx beam) in different directions. A terminal/user equipment (UE) receives the Tx beam using a reception beam (Rx beam), measures a channel state information reference signal (CSI-RS) or a synchronization signal block (SSB) signal transmitted on all Tx beams, and selects X beams (X=1, 2, 4) with the best reception performance (e.g., layer 1 reference signal received power (L1-RSRP)) and then reports index information of reference signal resources corresponding to these X beams to the base station. Based on the information reported from the UE, the base station selects the appropriate Tx beam for subsequent communications and indicates the selected beam information to the UE.

Regarding a method of reporting X L1-RSRPs and indexes of corresponding X reference signal resource, for artificial intelligence (AI)/machine learning (ML)-based beam management, in case that a large number of beams or beam pairs are included in a reference signal resource set, it means that many indexes of the reference signal resource must be reported using the aforementioned reporting format, resulting in high feedback overhead.

BRIEF SUMMARY

Embodiments of the present application provide methods and apparatuses for information transmission and a storage medium to solve a problem of high reporting overhead in the related art.

An embodiment of the present application provides a method for information transmission, performed by a terminal, including:

obtaining a reporting configuration message transmitted from a network device; and

transmitting information to be reported indicated by the reporting configuration message to the network device;

transmitting the information to be reported indicated by the reporting configuration message to the network device includes:

in case that the reporting configuration message indicates reporting measurement results, transmitting indexes associated with partial reference signal resources to the network device, mapping measurement results in a mapping order, and transmitting mapped measurement results; or

in case that the reporting configuration message indicates reporting top-K reference signal resources, transmitting first indexes and/or second indexes associated with the K reference signal resources to the network device, where K is a positive integer; or

in case that the reporting configuration message indicates reporting reference signal resource set patterns or combinations, transmitting an index of one or more reference signal resource set patterns or combinations to the network device.

In some embodiments, transmitting the indexes associated with partial reference signal resources to the network device and mapping the measurement results in the mapping order includes:

measuring the reference signal resources to obtain multiple measurement results;

selecting a first reference measurement result from the multiple measurement results;

determining differences between remaining measurement results among the multiple measurement results other than the first reference measurement result and the first reference measurement result; and

transmitting, to the network device, the first reference measurement result, and a first index and a second index associated with a reference signal resource corresponding to the first reference measurement result, and mapping the differences in a mapping order.

In some embodiments, transmitting, to the network device, the first reference measurement result, and the first index and the second index associated with the reference signal resource corresponding to the first reference measurement result, and mapping the differences in the mapping order includes: transmitting, to the network device, the first reference measurement result, and the first index and the second index associated with the reference signal resource corresponding to the first reference measurement result, and mapping a difference corresponding to each reference signal resource in a first order of first indexes associated with reference signal resources corresponding to the differences and a second order of second indexes associated with the reference signal resource corresponding to the differences.

In some embodiments, transmitting the indexes associated with partial reference signal resources to the network device and mapping the measurement results in the mapping order includes:

measuring the reference signal resources to obtain multiple measurement results;

selecting a second reference measurement result from multiple measurement results corresponding to each reference signal resource set;

determining differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

In some embodiments, transmitting, to the network device, the second reference measurement result corresponding to each reference signal resource set and the second index associated with the reference signal resource corresponding to the second reference measurement result, and mapping the differences in a mapping order includes: transmitting, to the network device, the second reference measurement result corresponding to each reference signal resource set and the second index associated with the reference signal resource corresponding to the second reference measurement result, and mapping a difference corresponding to each reference signal resource in a first order of first indexes associated with reference signal resources corresponding to the differences and a second order of second indexes associated with the reference signal resources corresponding to the differences.

In some embodiments, transmitting the indexes associated with partial reference signal resources to the network device and mapping the measurement results in the mapping order includes:

measuring the reference signal resources to obtain multiple measurement results;

selecting a first reference measurement result from the multiple measurement results, and selecting second reference measurement results from multiple measurement results corresponding to second reference signal resource sets other than a first reference signal resource set corresponding to the first reference measurement result;

determining a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In some embodiments, transmitting, to the network device, the first reference measurement result, the first index and the second index associated with the reference signal resource corresponding to the first reference measurement result, and the second index associated with the reference signal resource corresponding to the first difference, and mapping the first difference, the second difference, and the third difference in a mapping order includes:
transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a first order of first indexes associated with reference signal resources corresponding to the first difference, the second difference, and the third difference, and a second order of second indexes associated with the reference signal resources corresponding to the first difference, the second difference and the third difference.

In some embodiments, transmitting the indexes associated with partial reference signal resources to the network device and mapping the measurement results in the mapping order includes:

measuring reference signal resources at different measurement time instances to obtain multiple measurement results;

selecting a first reference measurement result from the multiple measurement results;

determining differences between remaining measurement results among the multiple measurement results other than the first reference measurement result and the first reference measurement result; and

transmitting, to the network device, the first reference measurement result, a first index and a second index associated with a reference signal resource corresponding to the first reference measurement result, and an index of measurement time instance associated with the reference signal resource corresponding to the first reference measurement result, and mapping the differences in a mapping order.

In some embodiments, transmitting, to the network device, the first reference measurement result, the first index and the second index associated with the reference signal resource corresponding to the first reference measurement result, and the index of the measurement time instance associated with the reference signal resource corresponding to the first reference measurement result, and mapping the differences in the mapping order includes:
transmitting, to the network device, the first reference measurement result, the first index and the second index associated with the reference signal resource corresponding to the first reference measurement result, and the index of the measurement time instance associated with the reference signal resource corresponding to the first reference measurement result and mapping a difference corresponding to each reference signal resource in a third order of the indexes of the measurement time instances, a first order of first indexes associated with reference signal resources corresponding to the differences and a second order of second indexes associated with the reference signal resources corresponding to the differences.

In some embodiments, transmitting the indexes associated with partial reference signal resources to the network device and mapping the measurement results in the mapping order includes:

measuring reference signal resources at different measurement time instances to obtain multiple measurement results;

selecting a first reference measurement result from the multiple measurement results obtained at each measurement time instance;

determining, for each measurement time instance, differences between remaining measurement results among the multiple measurement results other than the first reference measurement result and the first reference measurement result; and

transmitting, to the network device, the first reference measurement result, and a first index and a second index associated with a reference signal resource corresponding to the first reference measurement result, and mapping the differences in a mapping order.

In some embodiments, transmitting, to the network device, the first reference measurement result, and the first index and the second index associated with the reference signal resource corresponding to the first reference measurement result, and mapping the differences in the mapping order includes:
transmitting, to the network device, the first reference measurement result, and the first index and the second index associated with the reference signal resource corresponding to the first reference measurement result, and mapping a difference corresponding to each reference signal resource in a third order of indexes of measurement time instances, a first order of first indexes associated with reference signal resources corresponding to the differences and a second order of second indexes associated with the reference signal resource corresponding to the differences.

In some embodiments, transmitting the indexes associated with partial reference signal resources to the network device and mapping the measurement results in the mapping order includes:

measuring reference signal resources at different measurement time instances to obtain multiple measurement results;

selecting, for each measurement time instance, a second reference measurement result from multiple measurement results corresponding to each reference signal resource set;

determining, for each measurement time instance, differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

In some embodiments, transmitting, to the network device, the second reference measurement result corresponding to each reference signal resource set and the second index associated with the reference signal resource corresponding to the second reference measurement result, and mapping the differences in a mapping order includes:
transmitting, to the network device, the second reference measurement result corresponding to each reference signal resource set and the second index associated with the reference signal resource corresponding to the second reference measurement result, and mapping a difference corresponding to each reference signal resource in a third order of indexes of the measurement time instances, a first order of first indexes associated with reference signal resources corresponding to the differences and a second order of second indexes associated with the reference signal resource corresponding to the differences.

In some embodiments, transmitting the indexes associated with partial reference signal resources to the network device and mapping the measurement results in the mapping order includes:

measuring reference signal resources at different measurement time instances to obtain multiple measurement results;

selecting, for each measurement time instance, a first reference measurement result from the multiple measurement results, and selecting second reference measurement results from multiple measurement results corresponding to second reference signal resource sets other than a first reference signal resource set corresponding to the first reference measurement result;

determining, for each measurement time instance, a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In some embodiments, transmitting, to the network device, the first reference measurement result, the first index and the second index associated with the reference signal resource corresponding to the first reference measurement result, and the second index associated with the reference signal resource corresponding to the first difference, and mapping the first difference, the second difference, and the third difference in the mapping order includes:

transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

In some embodiments, transmitting the indexes associated with partial reference signal resources to the network device and mapping the measurement results in the mapping order includes:

measuring reference signal resources at different measurement time instances to obtain multiple measurement results;

selecting a first reference measurement result from the multiple measurement results; and selecting a second reference measurement result from second measurement time instances other than a first measurement time instance corresponding to the first reference measurement result;

determining a first difference between each of the second reference measurement results and the first reference measurement result, determining, for each measurement time instance, a second difference between remaining measurement results other than the first reference measurement result and the first reference measurement result or a third difference between remaining measurement results other than the first difference and the first difference; and

transmitting, to the network device, the first reference measurement result, a first index and a second index associated with a reference signal resource corresponding to the first reference measurement result, a first index and a second index associated with a reference signal resource corresponding to the first difference, and an index of a measurement time instance associated with a reference signal resource corresponding to the first reference measurement result and mapping the first difference, the second difference, and the third difference in a mapping order.

In some embodiments, transmitting, to the network device, the first reference measurement result, the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference in the mapping order includes:

transmitting, to the network device, the first reference measurement result and the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

In some embodiments, the first reference measurement result or the second reference measurement result includes any of:

a largest value;

a smallest value;

a median value; or

an average value.

In some embodiments, the first order or the second order includes any of:

an ascending order;

a descending order;

an order configured by the network device; or

a given order.

In some embodiments, the first indexes are indexes of reference signal resource sets, and the second indexes are indexes of reference signal resources; or
the first indexes are indexes of reference signal resources, and the second indexes are indexes of repetition numbers for reference signal resources.

In some embodiments, the information to be reported indicated by the reporting configuration message is used to perform associated operations on the artificial intelligence (AI) model.

In some embodiments, the associated operations performed on the AI model includes one or more of:

model training;

model inference;

model monitoring; or

model update.

An embodiment of the present application provides a method for information transmission, performed by a network device, including:

transmitting a reporting configuration message to a terminal, where the reporting configuration message is used to indicate information to be reported; and

receiving the information to be reported indicated by the reporting configuration message transmitted from the terminal includes:
receiving the information to be reported indicated by the reporting configuration message transmitted from the terminal includes:

in case that the reporting configuration message indicates reporting measurement results, receiving indexes associated with partial reference signal resources transmitted from the terminal, and sequentially receiving measurement results transmitted from the terminal; or

in case that the reporting configuration message indicates reporting top-K reference signal resources, receiving first indexes and/or second indexes associated with the K reference signal resources transmitted from the terminal, where K is a positive integer; or

in case that the reporting configuration message indicates reporting reference signal resource set patterns or combinations, receiving an index of one or more reference signal resource set patterns or combinations transmitted from the terminal.

In some embodiments, the first indexes are indexes of a reference signal resource set, and the second indexes are indexes of reference signal resources; or
the first indexes are indexes of reference signal resources, and the second indexes are indexes of repetition numbers for reference signal resources.

In some embodiments, the method further includes:
performing associated operations on an AI model based on information to be reported indicated by received reporting configuration message.

In some embodiments, the associated operations on the AI model include one or more of:

model training;

model inference;

model monitoring; or

model update.

An embodiment of the present application provides a terminal, including a memory, a transceiver, and a processor;
where the memory is used for storing a computer program; the transceiver is used for receiving and sending data under control of the processor; the processor is used for reading the computer program in the memory and performing operations of:

obtaining a reporting configuration message transmitted from a network device; and

transmitting information to be reported indicated by the reporting configuration message to the network device;

transmitting the information to be reported indicated by the reporting configuration message to the network device includes:

in case that the reporting configuration message indicates reporting measurement results, transmitting indexes associated with partial reference signal resources to the network device, mapping measurement results in a mapping order, and transmitting mapped measurement results; or

in case that the reporting configuration message indicates reporting top-K reference signal resources, transmitting first indexes and/or second indexes associated with the K reference signal resources to the network device, where K is a positive integer; or

in case that the reporting configuration message indicates reporting reference signal resource set patterns or combination, transmitting an index of one or more reference signal resource set patterns or combinations to the network device.

In some embodiments, transmitting the indexes associated with partial reference signal resources to the network device and mapping the measurement results in the mapping order includes:

measuring the reference signal resources to obtain multiple measurement results;

selecting a first reference measurement result from the multiple measurement results;

determining differences between remaining measurement results among the multiple measurement results other than the first reference measurement result and the first reference measurement result; and

transmitting, to the network device, the first reference measurement result, and a first index and a second index associated with a reference signal resource corresponding to the first reference measurement result, and mapping the differences in a mapping order.

In some embodiments, transmitting, to the network device, the first reference measurement result, and the first index and the second index associated with the reference signal resource corresponding to the first reference measurement result, and mapping the differences in the mapping order includes:
transmitting, to the network device, the first reference measurement result, and the first index and the second index associated with the reference signal resource corresponding to the first reference measurement result, and mapping a difference corresponding to each reference signal resource in a first order of first indexes associated with reference signal resources corresponding to the differences and a second order of second indexes associated with the reference signal resource corresponding to the differences.

In some embodiments, transmitting the indexes associated with partial reference signal resources to the network device and mapping the measurement results in the mapping order includes:

measuring the reference signal resources to obtain multiple measurement results;

selecting a second reference measurement result from multiple measurement results corresponding to each reference signal resource set;

determining differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

In some embodiments, transmitting, to the network device, the second reference measurement result corresponding to each reference signal resource set and a second index associated with a reference signal resource corresponding to the second reference measurement result, and mapping the differences in a mapping order includes: transmitting, to the network device, the second reference measurement result corresponding to each reference signal resource set and the second index associated with the reference signal resource corresponding to the second reference measurement result, and mapping a difference corresponding to each reference signal resource in a first order of first indexes associated with reference signal resources corresponding to the differences and a second order of second indexes associated with the reference signal resources corresponding to the differences.

In some embodiments, transmitting the indexes associated with partial reference signal resources to the network device and mapping the measurement results in the mapping order includes:

measuring the reference signal resources to obtain multiple measurement results;

selecting a first reference measurement result from the multiple measurement results, and selecting second reference measurement results from multiple measurement results corresponding to second reference signal resource sets other than a first reference signal resource set corresponding to the first reference measurement result;

determining a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In some embodiments, transmitting, to the network device, the first reference measurement result, the first index and the second index associated with the reference signal resource corresponding to the first reference measurement result, and the second index associated with the reference signal resource corresponding to the first difference, and mapping the first difference, the second difference, and the third difference in a mapping order includes: transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a first order of first indexes associated with reference signal resources corresponding to the first difference, the second difference, and the third difference, and a second order of second indexes associated with the reference signal resources corresponding to the first difference, the second difference and the third difference.

In some embodiments, transmitting the indexes associated with partial reference signal resources to the network device and mapping the measurement results in the mapping order includes:

measuring reference signal resources at different measurement time instances to obtain multiple measurement results;

selecting a first reference measurement result from the multiple measurement results;

determining differences between remaining measurement results among the multiple measurement results other than the first reference measurement result and the first reference measurement result; and

transmitting, to the network device, the first reference measurement result, a first index and a second index associated with a reference signal resource corresponding to the first reference measurement result, and an index of measurement time instances associated with the reference signal resource corresponding to the first reference measurement result, and mapping the differences in a mapping order.

In some embodiments, transmitting, to the network device, the first reference measurement result, the first index and the second index associated with the reference signal resource corresponding to the first reference measurement result, and the index of the measurement time instance associated with the reference signal resource corresponding to the first reference measurement result, and mapping the differences in the mapping order includes: transmitting, to the network device, the first reference measurement result, the first index and the second index associated with the reference signal resource corresponding to the first reference measurement result, and the index of the measurement time instance associated with the reference signal resource corresponding to the first reference measurement result and mapping a difference corresponding to each reference signal resource in a third order of the indexes of the measurement time instances, a first order of first indexes associated with reference signal resources corresponding to the differences and a second order of second indexes associated with the reference signal resources corresponding to the differences.

In some embodiments, transmitting the indexes associated with partial reference signal resources to the network device and mapping the measurement results in the mapping order includes:

measuring reference signal resources at different measurement time instances to obtain multiple measurement results;

selecting a first reference measurement result from the multiple measurement results obtained at each measurement time instance;

determining, for each measurement time instance, differences between remaining measurement results among the multiple measurement results other than the first reference measurement result and the first reference measurement result; and

transmitting, to the network device, the first reference measurement result, and a first index and a second index associated with a reference signal resource corresponding to the first reference measurement result, and mapping the differences in a mapping order.

In some embodiments, transmitting, to the network device, the first reference measurement result, and the first index and the second index associated with the reference signal resource corresponding to the first reference measurement result, and mapping the differences in the mapping order includes: transmitting, to the network device, the first reference measurement result, and the first index and the second index associated with the reference signal resource corresponding to the first reference measurement result, and mapping a difference corresponding to each reference signal resource in a third order of indexes of measurement time instances, a first order of first indexes associated with reference signal resources corresponding to the differences and a second order of second indexes associated with the reference signal resources corresponding to the differences.

In some embodiments, transmitting the indexes associated with partial reference signal resources to the network device and mapping the measurement results in the mapping order includes:

measuring reference signal resources at different measurement time instances to obtain multiple measurement results;

selecting, for each measurement time instance, a second reference measurement result from multiple measurement results corresponding to each reference signal resource set;

determining, for each measurement time instance, differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

In some embodiments, transmitting, to the network device, the second reference measurement result corresponding to each reference signal resource set and the second index associated with the reference signal resource corresponding to the second reference measurement result, and mapping the differences in a mapping order includes: transmitting, to the network device, the second reference measurement result corresponding to each reference signal resource set and the second index associated with the reference signal resource corresponding to the second reference measurement result, and mapping a difference corresponding to each reference signal resource in a third order of indexes of the measurement time instances, a first order of first indexes associated with reference signal resources corresponding to the differences and a second order of second indexes associated with the reference signal resource corresponding to the differences.

In some embodiments, transmitting the indexes associated with partial reference signal resources to the network device and mapping the measurement results in the mapping order includes:

measuring the reference signal resources at different measurement time instances to obtain multiple measurement results;

selecting, for each measurement time instance, a first reference measurement result from the multiple measurement results, and selecting second reference measurement results from multiple measurement results corresponding to second reference signal resource sets other than a first reference signal resource set corresponding to the first reference measurement result;

determining, for each measurement time instance, a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In some embodiments, transmitting, to the network device, the first reference measurement result, the first index and the second index associated with the reference signal resource corresponding to the first reference measurement result, and the second index associated with the reference signal resource corresponding to the first difference, and mapping the first difference, the second difference, and the third difference in a mapping order includes: transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

In some embodiments, transmitting the indexes associated with partial reference signal resources to the network device and mapping the measurement results in the mapping order includes:

measuring reference signal resources at different measurement time instances to obtain multiple measurement results;

selecting a first reference measurement result from the multiple measurement results; and selecting a second reference measurement result from second measurement time instances other than a first measurement time instance corresponding to the first reference measurement result;

determining a first difference between each of the second reference measurement results and the first reference measurement result, determining, for each measurement time instance, a second difference between remaining measurement results corresponding to the first reference signal resource set other than the first reference measurement result and the first reference measurement result or a third difference between remaining measurement results other than the first difference and the first difference; and

transmitting, to the network device, the first reference measurement result, a first index and a second index associated with a reference signal resource corresponding to the first reference measurement result, a first index and a second index associated with a reference signal resource corresponding to the first difference, and an index of a measurement time instance associated with a reference signal resource corresponding to the first reference measurement result and mapping the first difference, the second difference, and the third difference in a mapping order.

In some embodiments, transmitting, to the network device, the first reference measurement result, the first index and a second index associated with the reference signal resource corresponding to the first reference measurement result, the first index and the second index associated with a reference signal resource corresponding to the first difference, and the index of a measurement time instance associated with the reference signal resource corresponding to the first reference measurement result and mapping the first difference, the second difference, and the third difference in the mapping order includes:
transmitting, to the network device, the first reference measurement result and the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

An embodiment of the present application provides a network device, including a memory, a transceiver and a processor;
where the memory is used for storing a computer program; the transceiver is used for receiving and sending data under control of the processor; the processor is used for reading the computer program in the memory and performing operations of:

transmitting a reporting configuration message to a terminal, where the reporting configuration message is used to indicate information to be reported; and

receiving the information to be reported indicated by the reporting configuration message transmitted from the terminal;

receiving the information to be reported indicated by the reporting configuration message transmitted from the terminal includes:

in case that the reporting configuration message indicates reporting measurement results, receiving indexes associated with partial reference signal resources transmitted from the terminal, and sequentially receiving measurement results transmitted from the terminal; or

in case that the reporting configuration message indicates reporting top-K reference signal resources, receiving first indexes and/or second indexes associated with the K reference signal resources transmitted from the terminal, where K is a positive integer; or

in case that the reporting configuration message indicates reporting reference signal resource set patterns or combination, receiving an index of one or more reference signal resource set patterns or combinations transmitted from the terminal.

In some embodiments, the first indexes are indexes of a reference signal resource set, and the second indexes are indexes of reference signal resources; or
the first indexes are indexes of reference signal resources, and the second indexes are indexes of repetition numbers for reference signal resources.
In some embodiments, the processor is used for reading the computer program in the memory and performing operation of:
performing associated operations on an artificial intelligence (AI) model based on information to be reported indicated by received reporting configuration message.

In some embodiments, the associated operations performed on the AI model include one or more of:

model training;

model inference;

model monitoring; or

model update.

An embodiment of the present application further provides an apparatus for information transmission, including:

an obtaining module, used for obtaining a reporting configuration message transmitted from a network device; and

a first transmitting module, used for transmitting information to be reported indicated by the reporting configuration message to the network device;

transmitting the information to be reported indicated by the reporting configuration message to the network device includes:

in case that the reporting configuration message indicates reporting measurement results, transmitting indexes associated with partial reference signal resources to the network device, mapping measurement results in a mapping order, and transmitting mapped measurement results; or

in case that the reporting configuration message indicates reporting top-K reference signal resources, transmitting first indexes and/or second indexes associated with the K reference signal resources to the network device, where K is a positive integer; or

in case that the reporting configuration message indicates reporting reference signal resource set patterns or combination, transmitting an index of one or more reference signal resource set patterns or combinations to the network device.

In some embodiments, the first transmitting module includes a first measuring unit, a first selecting unit, a first processing unit and a first transmitting unit, where

the first measuring unit is used for measuring the reference signal resources to obtain multiple measurement results;

the first selecting unit is used for selecting a first reference measurement result from the multiple measurement results;

the first processing unit is used for determining differences between remaining measurement results among the multiple measurement results other than the first reference measurement result and the first reference measurement result; and

the first transmitting unit is used for transmitting, to the network device, the first reference measurement result, and a first index and a second index associated with a reference signal resource corresponding to the first reference measurement result, and mapping the differences in a mapping order.

In some embodiment, the first transmitting unit is further used for:
transmitting, to the network device, the first reference measurement result, and the first index and the second index associated with the reference signal resource corresponding to the first reference measurement result, and mapping a difference corresponding to each reference signal resource in a first order of first indexes associated with reference signal resources corresponding to the differences and a second order of second indexes associated with the reference signal resource corresponding to the differences.

In some embodiments, the first transmitting module includes a second measuring unit, a second selecting unit, a second processing unit and a second transmitting unit, where

the second measuring unit is used for measuring the reference signal resources to obtain multiple measurement results;

the second selecting unit is used for selecting a second reference measurement result from multiple measurement results corresponding to each reference signal resource set;

the second processing unit is used for determining differences between remaining measurement results among the multiple measurement results corresponding to each reference signal resource set other than the second reference measurement result and the second reference measurement result; and

the second transmitting unit is used for transmitting, to the network device, the second reference measurement result corresponding to each reference signal resource set and a second index associated with a reference signal resource corresponding to the second reference measurement result, and mapping the differences in a mapping order.

In some embodiments, the second transmitting unit is further used for:
transmitting, to the network device, the second reference measurement result corresponding to each reference signal resource set and the second index associated with the reference signal resource corresponding to the second reference measurement result, and mapping a difference corresponding to each reference signal resource in a first order of first indexes associated with reference signal resources corresponding to the differences and a second order of second indexes associated with the reference signal resource corresponding to the differences.
In some embodiments, the first transmitting module includes a third measuring unit, a third selecting unit, a third processing unit and a third transmitting unit, where

the third measuring unit is used for measuring the reference signal resources to obtain multiple measurement results;

the third selecting unit is used for selecting a first reference measurement result from the multiple measurement results, and selecting second reference measurement results from multiple measurement results corresponding to second reference signal resource sets other than a first reference signal resource set corresponding to the first reference measurement result;

the third processing unit is used for determining a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

the third transmitting unit is used for transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In some embodiments, the third transmitting unit is further used for:
transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a first order of first indexes associated with reference signal resources corresponding to the first difference, the second difference, and the third difference, and a second order of second indexes associated with the reference signal resources corresponding to the first difference, the second difference and the third difference.
In some embodiments, the first transmitting module includes a fourth measuring unit, a fourth selecting unit, a fourth processing unit and a fourth transmitting unit, where

the fourth measuring unit is used for measuring the reference signal resources at different measurement time instances to obtain multiple measurement results;

the fourth selecting unit is used for selecting a first reference measurement result from the multiple measurement results;

the fourth processing unit is used for determining differences between remaining measurement results among the multiple measurement results other than the first reference measurement result and the first reference measurement result; and

the fourth transmitting unit is used for transmitting, to the network device, the first reference measurement result, a first index and a second index associated with a reference signal resource corresponding to the first reference measurement result, and an index of measurement time instances associated with the reference signal resource corresponding to the first reference measurement result, and mapping the differences in a mapping order.

In some embodiments, the fourth processing unit is further used for:
transmitting, to the network device, the first reference measurement result, the first index and the second index associated with the reference signal resource corresponding to the first reference measurement result, and the indexes of the measurement time instances associated with the reference signal resource corresponding to the first reference measurement result and mapping a difference corresponding to each reference signal resource in a third order of the indexes of the measurement time instances, a first order of first indexes associated with reference signal resources corresponding to the differences and a second order of second indexes associated with the reference signal resources corresponding to the differences.

In some embodiments, the first transmitting module includes a fifth measuring unit, a fifth selecting unit, a fifth processing unit and a fifth transmitting unit, where

the fifth measuring unit is used for measuring the reference signal resources at different measurement time instances to obtain multiple measurement results;

the fifth selecting unit is used for selecting a first reference measurement result from the multiple measurement results obtained at each measurement time instance;

the fifth processing unit is used for determining, for each measurement time instance, differences between remaining measurement results among the multiple measurement results other than the first reference measurement result and the first reference measurement result; and

the fifth transmitting unit is used for transmitting, to the network device, the first reference measurement result, and a first index and a second index associated with a reference signal resource corresponding to the first reference measurement result, and mapping the differences in a mapping order.

In some embodiments, the fifth transmitting unit is further used for:
transmitting, to the network device, the first reference measurement result, and the first index and the second index associated with the reference signal resource corresponding to the first reference measurement result, and mapping a difference corresponding to each reference signal resource in a third order of indexes of measurement time instances, a first order of first indexes associated with reference signal resources corresponding to the differences and a second order of second indexes associated with the reference signal resource corresponding to the differences.

In some embodiments, the first transmitting module includes a sixth measuring unit, a sixth selecting unit, a sixth processing unit and a sixth transmitting unit, where

the sixth measuring unit is used for measuring reference signal resources at different measurement time instances to obtain multiple measurement results;

the sixth selecting unit is used for selecting, for each measurement time instance, a second reference measurement result from multiple measurement results corresponding to each reference signal resource set;

the sixth processing unit is used for determining, for each measurement time instance, differences between remaining measurement results among the multiple measurement results corresponding to each reference signal resource set other than the second reference measurement result and the second reference measurement result; and

the sixth transmitting unit is used for transmitting, to the network device, the second reference measurement result corresponding to each reference signal resource set and a second index associated with a reference signal resource corresponding to the second reference measurement result, and mapping the differences in a mapping order.

In some embodiments, the sixth transmitting unit is further used for:

transmitting, to the network device, the second reference measurement result corresponding to each reference signal resource set and the second index associated with the reference signal resource corresponding to the second reference measurement result, and mapping a difference corresponding to each reference signal resource in a third order of indexes of the measurement time instances, a first order of first indexes associated with reference signal resources corresponding to the differences and a second order of second indexes associated with the reference signal resource corresponding to the differences.

In some embodiments, the first transmitting module includes a seventh measuring unit, a seventh selecting unit, a seventh processing unit and a seventh transmitting unit, where

the seventh measuring unit is used for measuring the reference signal resources at different measurement time instances to obtain multiple measurement results;

the seventh selecting unit is used for selecting, for each measurement time instance, a first reference measurement result from the multiple measurement results, and selecting second reference measurement results from multiple measurement results corresponding to second reference signal resource sets other than a first reference signal resource set corresponding to the first reference measurement result;

the seventh processing unit is used for determining, for each measurement time instance, a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

the seventh transmitting unit is used for transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In some embodiments, the seventh transmitting unit is further used for:
transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

In some embodiments, the first transmitting module includes an eighth measuring unit, an eighth selecting unit, an eighth processing unit and an eighth transmitting unit, where

the eighth measuring unit is used for measuring the reference signal resources at different measurement time instances to obtain multiple measurement results;

the eighth selecting unit is used for selecting a first reference measurement result from the multiple measurement results; and selecting a second reference measurement result from second measurement time instances other than a first measurement time instance corresponding to the first reference measurement result;

the eighth processing unit is used for determining a first difference between each of the second reference measurement results and the first reference measurement result, determining, for each measurement time instance, a second difference between remaining measurement results corresponding to the first reference signal resource set other than the first reference measurement result and the first reference measurement result or a third difference between remaining measurement results other than the first difference and the first difference; and

the eighth transmitting unit is used for transmitting, to the network device, the first reference measurement result, a first index and a second index associated with a reference signal resource corresponding to the first reference measurement result, a first index and a second index associated with a reference signal resource corresponding to the first difference, and an index of a measurement time instance associated with a reference signal resource corresponding to the first reference measurement result and mapping the first difference, the second difference, and the third difference in a mapping order.

In some embodiments, the eighth transmitting unit is further used for:
transmitting, to the network device, the first reference measurement result and the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

In some embodiments, the first reference measurement result or the second reference measurement result includes any of:

a largest value;

a smallest value;

a median value; or

an average value.

In some embodiments, the first order or the second order includes any of:

an ascending order;

a descending order;

an order configured by the network device; or

a given order.

In some embodiments, the first indexes are indexes of reference signal resource sets, and the second indexes are indexes of reference signal resources; or
the first indexes are indexes of reference signal resources, and the second indexes are indexes of repetition numbers for reference signal resources.

In some embodiments, the information to be reported indicated by the reporting configuration message is used to perform associated operations on the artificial intelligence (AI) model.

In some embodiments, the associated operations performed on the AI model includes one or more of:

model training;

model inference;

model monitoring; or

model update.

An embodiment of the present application further provides an apparatus for information transmission, including:

a second transmitting module, used for transmitting a reporting configuration message to a terminal, where the reporting configuration message is used to indicate information to be reported; and

a receiving module, used for receiving the information to be reported indicated by the reporting configuration message transmitted from the terminal;

receiving the information to be reported indicated by the reporting configuration message transmitted from the terminal includes:

in case that the reporting configuration message indicates reporting measurement results, receiving indexes associated with partial reference signal resources transmitted from the terminal, and sequentially receiving measurement results transmitted from the terminal; or

in case that the reporting configuration message indicates reporting top-K reference signal resources, receiving first indexes and/or second indexes associated with the K reference signal resources transmitted from the terminal, where K is a positive integer; or

in case that the reporting configuration message indicates reporting reference signal resource set patterns or combination, receiving an index of one or more reference signal resource set patterns or combinations transmitted from the terminal.

In some embodiments, the first indexes are indexes of a reference signal resource set, and the second indexes are indexes of reference signal resources; or
the first indexes are indexes of reference signal resources, and the second indexes are indexes of repetition numbers for reference signal resources.
In some embodiments, the apparatus further includes a processing module,
where the processing module is used for performing associated operations on an AI model based on reported information indicated by received reporting configuration message.
In some embodiments, the associated operations performed on the AI model include one or more of:

model training;

model inference;

model monitoring; or

model update.

An embodiment of the present application further provides a processor-readable storage medium storing a computer program, where the computer program is used to cause a processor to perform the method for information transmission described above.
An embodiment of the present application further provides a computer-readable storage medium storing a computer program, where the computer program is used to cause a computer to perform the method for information transmission described above.
An embodiment of the present application further provides a communication device-readable storage medium storing a computer program, where the computer program is used to cause a communication device to perform the method for information transmission described above.
An embodiment of the present application further provides a chip product-readable storage medium storing a computer program, where the computer program is used to cause a chip product to perform the method for information transmission described above.
In methods and apparatuses for information transmission and a storage medium provided by the present application, excessive index information is avoided to be reported and signaling reporting overhead is reduced by reporting indexes associated with partial reference signal resources, or reporting indexes associated with the top-K reference signal resources, or reporting indexes of one or more reference signal resource set patterns or combinations thereof.

BRIEF DESCRIPTION OF THE DRAWINGS

To clearly illustrate solutions in the embodiments of the present application or in related art, the drawings used in the description of the embodiments or in related art are briefly described below. The drawings in the following description are only some embodiments of the present application, and other drawings may be obtained according to these drawings without any creative effort for those skilled in the art.

FIG. 1 is a first schematic flowchart of a method for information transmission according to an embodiment of the present application;

FIG. 2 is a second schematic flowchart of a method for information transmission according to an embodiment of the present application;

FIG. 3 is a schematic structural diagram of a terminal according to an embodiment of the present application;

FIG. 4 is a schematic structural diagram of a network device according to an embodiment of the present application;

FIG. 5 is a first schematic structural diagram of an apparatus for information transmission according to an embodiment of the present application; and

FIG. 6 is a second schematic structural diagram of an apparatus for information transmission according to an embodiment of the present application.

DETAILED DESCRIPTION

In a new radio (NR) system, to counteract path loss in high-frequency scenarios, a transmitter and a receiver obtain aligned beam pairs through beam management (BM) to improve beamforming gain. In a current downlink beam management procedure, a base station (BS) is required to cyclically transmit a transmission beam (Tx beam) in different directions. A user equipment (UE) receives the Tx beam using a reception beam (Rx beam), measures a channel state information reference signal (CSI-RS) or a synchronization signal block (SSB) signal transmitted on all Tx beams, and selects X beams (X=1, 2, 4) with the best reception performance (e.g., layer 1 reference signal received power (L1-RSRP)) and then reports index information of reference signal resources corresponding to these X beams to the base station. Based on the information reported from the UE, the base station selects the appropriate Tx beam for subsequent communications and indicates the selected beam information to the UE.

In related art, to obtain an optimal beam pair, the base station is required to transmit CSI-RS/SSB on all Tx beams, resulting in high reference signal resource consumption. Furthermore, the UE is required to measure the CSI-RS/SSB transmitted on all Tx beams using all Rx beams, resulting in high measurement and reporting overheads. To address these issues, artificial intelligence (AI)/machine learning (ML) technologies have been proposed. An optimal beam (pair) can be predicted based on measurements of partial beams (pairs) or measurement results of a historical beam (pair), saving RS transmission resources, UE measurement overhead, and UE measurement latency.

Model training, model inference, model monitoring, and model updates can be performed on either the base station or the UE. If the model inference occurs on the base station, the UE is required to report the measured quality of partial beams (beam pairs) to the base station as model input. If the model training/update occurs on the base station, the UE is required to report not only measured quality of partial beams (beam pairs) but also label information used for model training. If the model monitoring occurs on the base station, the UE is required to report the measured quality of beams (beam pairs) or top-K beam (beam pairs) to the base station.

AI/ML-bases beam management is one of research use cases for over-the-air AI/ML. The following two sub-use cases are considered sub-use cases for AI/ML beam management:

BM-case 1: spatial domain beam prediction, which predicts the top-K beams (beam pairs) of Set A based on Set B measured at a specific time instance;

BM-case 2: temporal domain beam prediction, which predicts the top-K beams (beam pairs) of Set A for N' future time instances based on Set B measured at N previous time instances.

The Set B and Set A can be sets of downlink transmission beams (DL Tx beams) or sets of transmission-reception beam pairs (Tx-Rx beam pairs). In DL Tx beam prediction, the UE fixes or selects the best Rx beam and measures the reference signal received power (RSRP) of partial DL Tx beams (Set B) transmitted from the base station. Based on measurement results of Set B, the base station or UE predicts the Tx beams corresponding to the top-K RSRPs in Set A, which is the Top-K DL Tx beam prediction. In Tx/Rx beam pair prediction, a beam pair consists of a BS Tx beam and a UE Rx beam. The UE measures the RSRP of beam pairs in the Set B. Based on the measurement results of Set B, the base station or UE predicts beam pairs corresponding to the top-K RSRP in Set A, which is the top-K Tx/Rx beam pair prediction. Furthermore, Set B can be a subset of Set A or not (for example, Set B is a wide beam and Set A is a narrow beam).

Tx/Rx beam pair prediction in BM-case 1 is taken as an example, it is assumed that the base station has 32 Tx beams and the UE has 4 Rx beams. 8 Tx beams on the base station and 4 Rx beams on the UE are selected, i.e., 32 beam pairs form Set B, and all 128 (32*4) beam pairs form Set A. An AI/ML model is used to predict the top-K beam pairs in Set A based on the measurement results of Set B. An output of the AI/ML model can be predicted indexes/identifications (IDs) of the top-K beam pairs of Set A, or predicted RSRPs of the beam pairs of Set A. The latter can select the top-K beam pair based on the predicted RSRPs.

It is assumed that the model training occurs at a base station side, the UE is required to report the following information to the base station:

1) RSRP of the beam pair of Set B;

2) ID of the top-K beam pair of Set A (assuming the output of the AI/ML model is the top-K beam pair ID); or the RSRP of the beam pair of Set A (assuming the output of the AI/ML model is the RSRP of the beam pair of Set A).

In a scheme for reporting the related channel state information (CSI), reporting L1-RSRP is performed as follows: the base station configures measurement reference signal resources and a reported number X (X=1/2/4) of reference signal resources to the UE. The UE then differentially reports the L1-RSRP of each of the X reference signal resources (the largest L1-RSRP uses 7 bits, the remaining L1-RSRPs use 4 bits) and an index of the reference signal resource corresponding to each L1-RSRP.

If a method of reporting L1-RSRPs of above reference signal resources is adopted, for AI/ML-based beam management, in case that a large number of beams or beam pairs are included of Set B or Set A, there is an issue that many indexes of the reference signal resources must be reported, resulting in high feedback overhead.

To address this issue, the present application provides an information reporting method/format that solves the issue of high feedback overhead occurred when the UE reports beam information in AI/ML-based beam management, reduces feedback overhead and improves system transmission performance.

In order to illustrate objectives, solutions and advantages of the present application clearly, the solutions in the embodiments of the present application are clearly and completely described in the following in conjunction with the accompanying drawings in the present application. These embodiments are a part of the embodiments of the present application, and not all of the embodiments. All other embodiments obtained by a person of ordinary skill in the art based on the embodiments of the present application without creative work are within the scope of the present application.

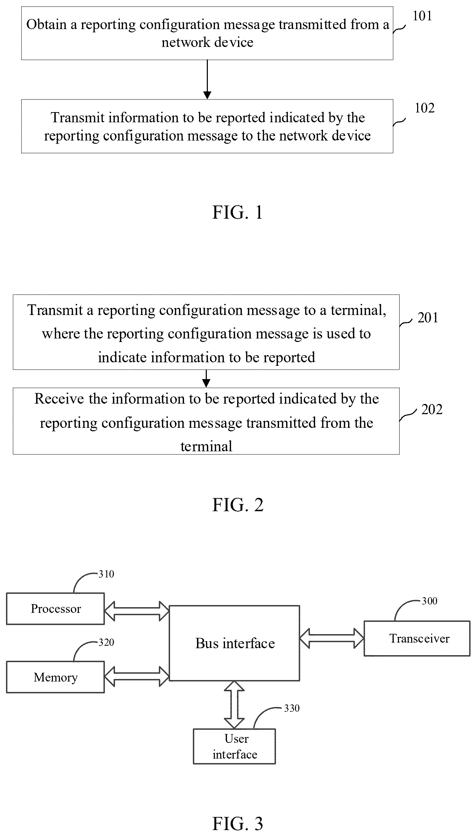

FIG. 1 is a first schematic flowchart of a method for information transmission according to an embodiment of the present application. As shown in FIG. 1, an embodiment of the present application provides a method for information transmission performed by a terminal, such as a mobile phone, etc. The method includes:

step 101, obtaining a reporting configuration message transmitted from a network device.

In the embodiment of the present application, the network device is a core network element, such as an access and mobility management function (AMF) or a unified data management (UDM), or is an access network element, such as a base station.

In case that the network device requires the UE to report associated information, the network device transmits a reporting configuration message to the UE and the reporting configuration message indicates a content of the information to be reported by the UE.

The UE obtains the reporting configuration message transmitted from the network device.

In some embodiments, the information to be reported indicated by the reporting configuration message is used to perform associated operations on the AI/ML model.

In some embodiments, the information to be reported indicated by the reporting configuration message includes one or more of:

measurement results;

one or more reference signal resource set patterns or combinations; or

Top-K beams (beam pairs).

The measurement result is Layer 1 reference signal received power (L1-RSRP) or layer 1 signal to interference plus noise ratio (L1-SINR) of a beam (beam pair).

The base station configures, to the UE, a reference signal resource set (RSR) and a reference signal resource corresponding to Set A, and configures or pre-defines several Set B patterns. Based on the measurement results, the UE selects a Set B pattern from a configured or predefined pattern set for reporting. For example, the base station configures, to the UE, reference signal resources corresponding to Set B pattern 1 and Set B pattern 2, the UE measures the average quality (e.g., L1-RSRP or L1-SINR) of the reference signal resources corresponding to Set B pattern 1 and Set B pattern 2, respectively. The UE reports the Set B pattern with the higher average beam quality, improving model training effect.

The top-K beams (beam pairs) are optimal K beams (beam pairs), where K is a positive integer. The UE receives configuration information for measuring the reference signal resource transmitted from the network device and reports the measurement results. The UE sorts measurement results of reference signal resources in all reference signal resource sets in a descending order, selects indexes of reference signal resource sets and indexes of reference signal resources corresponding to the top K measurement results for reporting, and sorts reported indexes in an order from 1 to K.

In some embodiments, performing associated operations on the AI/ML model include one or more of:

model training;

model inference;

model monitoring; or

model update.

In an embodiment, the UE reports beam measurement-associated information to the base station, and the base station performs AI-based beam management, including one or more of model training, model inference, model monitoring, and model updates on the AI/ML model, improving system transmission performance.

Step 102, transmitting information to be reported indicated by the reporting configuration message to the network device.

In some embodiments, transmitting the information to be reported indicated by the reporting configuration message to the network device includes:

in case that the reporting configuration message indicates reporting measurement results, transmitting indexes associated with partial reference signal resources to the network device, mapping measurement results in a mapping order, and transmitting mapped measurement results; or

in case that the reporting configuration message indicates reporting top-K reference signal resources, transmitting first indexes and/or second indexes associated with the K reference signal resources to the network device, where K is a positive integer; or

in case that the reporting configuration message indicates reporting reference signal resource set patterns or combinations, transmitting an index of one or more reference signal resource set patterns or combinations to the network device.

In an embodiment of the present application, the UE transmits corresponding information to the network device based on the information to be reported indicated by the reporting configuration message.

In some embodiments, in case that the reporting configuration message indicates reporting measurement results, the UE transmits indexes associated with partial reference signal resources to the network device and maps the measurement results in a mapping order.

In some embodiments, in case that the reporting configuration message indicates reporting top-K reference signal resources, the UE transmits first indexes and/or second indexes associated with the K reference signal resources to the network device.

In some embodiments, in case that the reporting configuration message indicates reporting reference signal resource set patterns or combinations, the UE transmits an index of one or more reference signal resource set patterns or combinations to the network device.

In some embodiments, in case that the reporting configuration message indicates reporting measurement results and top-K reference signal resources, the UE transmits indexes associated with partial reference signal resources to the network device, maps the measurement results in a mapping order and transmits mapped measurement results, and transmits first indexes and/or second indexes associated with the K reference signal resources to the network device.

In some embodiments, in case that the reporting configuration message indicates reporting measurement results and reference signal resource set patterns or combinations, the UE transmits indexes associated with partial reference signal resources to the network device, maps the measurement results in a mapping order and transmits mapped measurement results, and transmits an index of one or more reference signal resource set patterns or combinations to the network device.

In some embodiments, the first indexes are indexes of reference signal resource sets, and the second indexes are indexes of reference signal resources; or

the first indexes are indexes of reference signal resources, and the second indexes are indexes of repetition numbers for reference signal resources.

In a method for information transmission provided by the present application, excessive index information is avoided to be reported and signaling reporting overhead is reduced by reporting indexes associated with partial reference signal resources, or reporting indexes associated with the top-K reference signal resources, or reporting indexes of one or more reference signal resource set patterns or combinations thereof.

In some embodiments, transmitting the indexes associated with partial reference signal resources to the network device and mapping the measurement results in the mapping order includes:

measuring the reference signal resources to obtain multiple measurement results;

selecting a first reference measurement result from the multiple measurement results;

determining differences between remaining measurement results among the multiple measurement results other than the first reference measurement result and the first reference measurement result; and

transmitting, to the network device, the first reference measurement result, and a first index and a second index associated with a reference signal resource corresponding to the first reference measurement result, and mapping the differences in a mapping order.

In an embodiment of the present application, the first reference measurement result includes any of:

a largest value;

a smallest value;

a median value; or

an average value.

In case that a base station configures M resource sets, the m-th resource set includes $M_R^m$ resources, and the UE reports L1-RSRPs of all beam pairs of Set B or Set A, the first reference measurement result being a largest value is taken as an example, the UE receives the configuration information for measuring the reference signal resource transmitted from the network device and reports the measurement results. To report the measurement results, the UE sorts L1-RSRPs of all reference signal resources in the set and selects the largest measurement result, referred as to measurement value 1. The UE then processes measurement results of remaining reference signal resources by subtracting measurement value 1 from measurement results of the remaining reference signal resources to obtain differences, referred as to measurement values 2. In an embodiment, the UE quantizes the measurement value 1 into L bits and the measurement values 2 into Q bits. When the UE reports, reported content includes quantized measurement value 1, index information of a reference signal resource set and index information of a reference signal resource corresponding to the measurement value 1, and the quantized measurement values 2 and the quantized measurement values 2 are arranged in an order of indexes or identifications of the corresponding reference signal resource sets and indexes or identifications of the reference signal resources. (This eliminates the need to report indexes of reference signal resource sets and indexes of reference signal resource corresponding to the measurement values 2, thus reducing reporting overhead.)

In a method for information transmission provided by the present application, excessive index information is avoided to be reported and signaling reporting overhead is reduced by reporting indexes associated with partial reference signal resources and sequentially reporting other measurement results or differential measurement results.

In some embodiments, transmitting, to the network device, the first reference measurement result, and the first index and the second index associated with the reference signal resource corresponding to the first reference measurement result, and mapping the differences in the mapping order includes:

transmitting, to the network device, the first reference measurement result, and the first index and the second index associated with the reference signal resource corresponding to the first reference measurement result, and mapping a difference corresponding to each reference signal resource in a first order of first indexes associated with reference signal resources corresponding to the differences and a second order of second indexes associated with the reference signal resource corresponding to the differences.

In an embodiment, the UE transmits, to the network device, the first reference measurement result, a first index and a second index associated with the reference signal resource corresponding to the first reference measurement result, and maps a difference corresponding to each reference signal resource in a first order of first indexes associated with reference signal resources corresponding to the differences and a second order of second indexes associated with the reference signal resources corresponding to the differences.

In some embodiments, the first order or the second order includes any of:

an ascending order;

a descending order;

an order configured by the network device; or

a given order.

For example, both the first and second orders being an ascending order is taken as an example, the UE reports the largest measured L1-RSRP and an index of the resource set and an index of the resource corresponding the largest L1-RSRP. The differences among RSRP of the remaining reference signal resources and the largest measured L1-RSRP are reported in an order of 1st, 2nd, ..., $M$th resource set and $1^{st}, 2^{nd}, ..., M_R^{m\,th}$ resource in each resource set. The largest L1-RSRP is quantized into $L$ bits, and the differences among the RSRPs of the remaining reference signal resources and the largest L1-RSRP are quantized into $Q$ bits. A reporting format is as shown in Table 1.

Table 1

| CSI report number | CSI fields | # of bits |
|---|---|---|
| CSI report #n | Indicator of the resource set corresponding to the largest reported L1-RSRP | $\lceil \log_2 M \rceil$ |
| | CRI or SSBRI of the resource corresponding to the largest reported L1-RSRP | $\max \lceil \log_2 M_R^m \rceil$, m=1,2, ..., M |
| | the largest L1-RSRP | $L$ |
| | Differential RSRP of 1st CRI or SSBRI of the 1st resource set | $Q$ |
| | Differential RSRP of 2nd CRI or SSBRI of the 1st resource set | $Q$ |
| | ... | $Q$ |
| | Differential RSRP of 1st CRI or SSBRI of the 2nd resource set | $Q$ |
| | Differential RSRP of 2nd CRI or SSBRI of the 2nd resource set | $Q$ |
| | ... | |

In a method for information transmission provided by the present application, excessive index information is avoided to be reported and signaling reporting overhead is reduced by reporting indexes associated with partial reference signal resources and sequentially reporting other measurement results or differential measurement results.

In some embodiments, transmitting the indexes associated with partial reference signal resources to the network device and mapping the measurement results in the mapping order includes:

measuring the reference signal resources to obtain multiple measurement results;

selecting a second reference measurement result from multiple measurement results corresponding to each reference signal resource set;

determining differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

In an embodiment of the present application, the second reference measurement result includes any of:

a largest value;

a smallest value;

a median value; or

an average value.

The second reference measurement result being the largest value is taken as an example. The UE reports the L1-RSRPs of all beam pairs of Set B or Set A. For the M reference signal resource sets configured by the network device, the UE sorts measurement results of reference signal resources in each set and selects the largest measurement result in each set, referred to as the M measurement values 3. For each set, the UE processes the measurement results of remaining reference signal resources in the set by subtracting measurement value 3 corresponding to the set from measurement results of the remaining reference signal resources in the set to obtain differences, referred as to measurement values 4. In an embodiment, the UE quantizes the measurement value 3 into $L$ bits and the measurement values 4 into $Q$ bits, respectively. When reporting, the UE arranges the measurement results of the M sets in the order of $1^{st}$, $2^{nd}$, ..., $M^{th}$. The reported content for each set includes quantized measurement values 3, index information of the reference signal resources corresponding to measurement values 3, and the quantized measurement values 4. The quantized measurement values 4 are arranged in an order of indexes or identifications of the reference signal resources within the corresponding set.

In a method for information transmission provided by the present application, excessive index information is avoided to be reported and signaling reporting overhead is reduced by reporting indexes associated with partial reference signal resources and sequentially reporting other measurement results or differential measurement results.

In some embodiments, transmitting, to the network device, the second reference measurement result corresponding to each reference signal resource set and the second index associated with the reference signal resource corresponding to the second reference measurement result, and mapping the differences in a mapping order includes: transmitting, to the network device, the second reference measurement result corresponding to each reference signal resource set and the second index associated with the reference signal resource corresponding to the second reference measurement result, and mapping a difference corresponding to each reference signal resource in a first order of first indexes associated with reference signal resources corresponding to the differences and a second order of second indexes associated with the reference signal resources corresponding to the differences.

In an embodiment of the present application, the UE transmits, to the network device, the second reference measurement result corresponding to each reference signal resource set and a second index associated with a reference signal resource corresponding to the second reference measurement result, and maps a difference corresponding to each reference signal resource in a first order of first indexes associated with reference signal resources corresponding to the differences and a second order of second indexes associated with the reference signal resources corresponding to the differences.

For example, both the first and second orders being an ascending order is taken as an example, the UE reports the largest L1-RSRP and an index of the resource corresponding to the largest L1-RSRP in each resource set in an order of $1^{st}$, $2^{nd}$, ..., $M^{th}$ resource set. Differences between the RSRPs of the remaining reference signal resources in each resource set and the largest L1-RSRP measured in that resource set is reported in an order of $1^{st}, 2^{nd}, ..., M_R^{m\,th}$ resource set. The largest L1-RSRP in each resource set is quantized into L bits, and the differences among the RSRPs of the remaining reference signal resources and the largest L1-RSRP are quantized into $Q$ bits. A reporting format is as shown in Table 2.

Table 2

| CSI report number | CSI fields | # of bits |
|---|---|---|
| | CRI or SSBRI of the resource corresponding to the largest reported L1-RSRP of the $1^{st}$ resource set | $\lceil \log_2 M_R^1 \rceil$ |
| | the largest L1-RSRP of the $1^{st}$ resource set | $L$ |
| | Differential RSRP of $1^{st}$ CRI or SSBRI of the $1^{st}$ resource set | $Q$ |

(continued)

| CSI report number | CSI fields | # of bits |
|---|---|---|
| CSI report #n | Differential RSRP of 2nd CRI or SSBRI of the 1st resource set | $Q$ |
| | ... | $Q$ |
| | CRI or SSBRI of the resource corresponding to the largest reported L1-RSRP of the 2nd resource set | $\lceil \log_2 M_R^2 \rceil$ |
| | the largest L1-RSRP of the 2nd resource set | $L$ |
| | Differential RSRP of 1st CRI or SSBRI of the 2nd resource set | $Q$ |
| | Differential RSRP of 2nd CRI or SSBRI of the 2nd | $Q$ |
| | resource set | |
| | ... | |
| | CRI or SSBRI of the resource corresponding to the largest reported L1-RSRP of the $M$th resource set | $\lceil \log_2 M_R^M \rceil$ |
| | the largest L1-RSRP of the $M$th resource set | $L$ |
| | Differential RSRP of 1st CRI or SSBRI of the $M$th resource set | $Q$ |
| | ... | $Q$ |
| | Differential RSRP of $M_R^{M\,\text{th}}$ CRI or SSBRI of the $M$th resource set | $Q$ |

In a method for information transmission provided by the present application, excessive index information is avoided to be reported and signaling reporting overhead is reduced by reporting indexes associated with partial reference signal resources and sequentially reporting other measurement results or differential measurement results.

In some embodiments, transmitting the indexes associated with partial reference signal resources to the network device and mapping the measurement results in the mapping order includes:

measuring the reference signal resources to obtain multiple measurement results;

selecting a first reference measurement result from the multiple measurement results, and selecting second reference measurement results from multiple measurement results corresponding to second reference signal resource sets other than a first reference signal resource set corresponding to the first reference measurement result;

determining a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In an embodiment of the present application, the second reference measurement result being the largest value is taken as an example. The UE reports L1-RSRPs of all beam pairs of Set B or Set A. The UE sorts measurement results of reference signal resources in all sets and selects the largest measurement result, referred to as measurement value 1. For the reference signal resource set corresponding to measurement value 1 (referred to as reference signal resource set m), measurement results of the remaining reference signal resources in the set are processed. For example, the measurement value 1 in the set is subtracted from measurement results of the remaining reference signal resources in the set to obtain differences, referred to as measurement values 2. For reference signal resource sets other than set m, measurement value 1 is subtracted from the largest measurement result of each set to obtain a difference, referred to as measurement value 5. The measurement value 5 corresponding to the set is subtracted from the measurement results of the remaining reference signal resources in the set to obtain a difference, referred to as measurement values 6. In an embodiment, the UE quantizes the measurement value 1 into $L$ bits, the measurement values 2 and 6 into $Q_2$ bits respectively, and the measurement value 5 into $Q_1$ bits. When the UE reports, the reported content includes quantized measurement value 1, index information of the reference signal resource set and index information of the reference signal resource corresponding to measurement value 1, quantized measurement values 2, quantized measurement value 5, index information of the reference signal resource corresponding to measurement value 5, and quantized measurement values 6.

In a method for information transmission provided by the present application, excessive index information is avoided to be reported and signaling reporting overhead is reduced by reporting indexes associated with partial reference signal resources through two-stage differential reporting and sequentially reporting other measurement results or differential measurement results.

In some embodiments, transmitting, to the network device, the first reference measurement result, the first index and the second index associated with the reference signal resource corresponding to the first reference measurement result, and the second index associated with the reference signal resource corresponding to the first difference, and mapping the first difference, the second difference, and the third difference in a mapping order includes:

transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a first order of first indexes associated with reference signal resources corresponding to the first difference, the second difference, and the third difference, and a second order of second indexes associated with the reference signal resources corresponding to the first difference, the second difference and the third difference.

In an embodiment of the present application, the UE transmits, to the network device, the first reference measurement result and the first index and the second index associated with the reference signal resource corresponding to the first reference measurement result, and the second index associated with a reference signal resource corresponding to the first difference, and maps the first difference, the second difference, and the third difference corresponding to each reference signal resource in a first order of first indexes associated with reference signal resources corresponding to the first difference, the second difference, and the third difference, and a second order of second indexes associated with the reference signal resources corresponding to the first difference, the second difference and the third difference.

For example, both the first and second orders being in an ascending order is taken as an example. When the UE reports, reported content includes measurement value 1, index information of the reference signal resource set and index information of the reference signal resource corresponding to measurement value 1, measurement values 2, measurement value 5, index information of the reference signal resource corresponding to measurement value 5 and measurement values 6. The measurement values 2 are arranged in the order of the reference signal resource indexes or identifications within the set. Measurement value 5 in the measurement results for $M$-1 sets is reported in the order of 1st, 2nd, ..., $M$th. The measurement values 6 for each set are arranged in an order of indexes or identifications of reference signal resources in the set.

This is a two-stage differential reporting. The UE reports the largest measured L1-RSRP and indexes of the resource set and indexes of the resource corresponding to the largest measured L1-RSRP. Differences between the RSRPs of the remaining reference signal resources in the resource set and the largest L1-RSRP are reported in an order of 1st, 2nd ..., $M$th. For the remaining resource sets, differences are reported in an order of 1st, 2nd, ..., $M$th. For each of these resource sets, an index of the resource corresponding to the largest L1-RSRP in the resource set and a difference between the largest L1-RSRP in the current resource set and the largest L1-RSRP of all resource sets is reported. Differences between the L1-RSRP of the remaining reference signal resources in the current resource set and the largest L1-RSRP in the current resource set are reported in an order of 1st, 2nd, ..., $M_R^{m\,\text{th}}$. A reporting format is as shown in Table 3.

Table 3

| CSI report number | CSI fields | # of bits |
|---|---|---|
|  | Indicator of the resource set corresponding to the largest reported L1-RSRP | $\lceil \log_2 M \rceil$ |
|  | CRI or SSBRI of the resource corresponding to the largest reported L1-RSRP | $\max \lceil \log_2 M_R^m \rceil$ , m=1,2, ..., $M$ |
|  | the largest L1-RSRP | $L$ |
|  | Differential RSRP of 1st CRI or SSBRI of the reported resource set | $Q_2$ |

(continued)

| CSI report number | CSI fields | # of bits |
|---|---|---|
| CSI report #n | Differential RSRP of 2nd CRI or SSBRI of the reported resource set | $Q_2$ |
| | ... | |
| | CRI or SSBRI of the resource corresponding to the largest L1-RSRP of the 1st resource set | $\max\lceil \log_2 M_R^m \rceil$ , m=1,2, ..., $M$ |
| | Differential largest L1-RSRP of the 1st resource set | $Q_1$ |
| | Differential RSRP of 1st CRI or SSBRI of the 1st resource set | $Q_2$ |
| | Differential RSRP of 2nd CRI or SSBRI of the 1st resource set | $Q_2$ |
| | ... | |
| | CRI or SSBRI of the resource corresponding to the largest L1-RSRP of the 2nd resource set | $\max\lceil \log_2 M_R^m \rceil$ , m=1,2, ..., $M$ |
| | Differential largest L1-RSRP of the 2nd resource set | $Q_1$ |
| | Differential RSRP of 1st CRI or SSBRI of the 2nd resource set | $Q_2$ |
| | Differential RSRP of 2nd CRI or SSBRI of the 2nd resource set | $Q_2$ |
| | ... | |
| | CRI or SSBRI of the resource corresponding to the largest L1-RSRP of the $M$th resource set | $\max\lceil \log_2 M_R^m \rceil$ , m=1,2, ..., $M$ |
| | Differential largest L1-RSRP of the $M$th resource set | $Q_1$ |
| | Differential RSRP of 1st CRI or SSBRI of the $M$th resource set | $Q_2$ |
| | ... | $Q_2$ |
| | Differential RSRP of $M_R^{M\text{th}}$ CRI or SSBRI of the $M$th resource set | $Q_2$ |

In a method for information transmission provided by the present application, excessive index information is avoided to be reported and signaling reporting overhead is reduced by reporting indexes associated with partial reference signal resources through two-stage differential and sequentially reporting other measurement results or differential measurement results.

The above embodiment is applied to reporting the RSRP of beam pairs of Set B only if the base station has configured the resource set and resources corresponding to Set B to the UE. In some embodiments, in case that data for model training is reported, the base station configures, to the UE, a resource set and a resource corresponding to Set A, and configures or pre-defines several Set B patterns. Based on the measurement results, the UE can select a Set B pattern from a configured or predefined pattern set for reporting. For example, the base station configures, to the UE, reference signal resources corresponding to Set B pattern 1 and Set B pattern 2, the UE measures the average quality (e.g., L1-RSRP or L1-SINR) of the reference signal resources corresponding to Set B pattern 1 and Set B pattern 2, respectively. The UE reports the Set B pattern with the higher average beam quality, improving model training effect. Therefore, in the methods shown in Tables 1 to 3, Set B pattern index information needs to be added, which occupies a number of bits of

$\lceil \log_2 S \rceil$, $S$ is a configured or predefined number of Set B patterns.

In a method for information transmission provided by the present application, excessive index information is avoided to be reported and signaling reporting overhead is reduced by reporting indexes associated with partial reference signal resources through two-stage differential reporting and sequentially reporting other measurement results or differential measurement results.

In a method for information transmission provided by the present application, excessive index information is avoided to be reported and signaling reporting overhead is reduced by reporting indexes of one or more reference signal resource set patterns or combinations thereof.

In some embodiments, the UE reports the index information of the top-K beam pairs of Set A. That is, the UE reports index information of K reference signal resources, where K is configured by the base station.

The UE receives configuration information for measuring the reference signal resource transmitted from the network device and reports the measurement results. The UE sorts measurement results of reference signal resources in all sets in a descending order, selects indexes of reference signal resource sets and indexes of reference signal resources corresponding to the top-K measurement results for reporting, and sorts reported indexes in an order from 1 to K. It is assumed that Set A corresponds to $M$ resource sets, and the $m^{\text{th}}$ resource set includes $M_R^m$ resources, a reporting format is shown in Table 4.

Table 4

| CSI report number | CSI fields | # of bits |
|---|---|---|
| CSI report #n | Resource set indicator of the resource corresponding to the largest L1-RSRP | $\lceil \log_2 M \rceil$ |
| | CRI or SSBRI of the resource corresponding to the largest L1-RSRP | $\max \lceil \log_2 M_R^m \rceil$ , m=1,2, ..., $M$ |
| | Resource set indicator of the resource corresponding to the Top-2 largest L1-RSRP | $\lceil \log_2 M \rceil$ |
| | CRI or SSBRI of the resource corresponding to the Top-2largest L1-RSRP | $\max \lceil \log_2 M_R^m \rceil$ , m=1,2, ..., $M$ |
| | ... | |
| | Resource set indicator of the resource corresponding to the Top-K largest L1-RSRP | $\lceil \log_2 M \rceil$ |
| | CRI or SSBRI of the resource corresponding to the Top-K largest L1-RSRP | $\max \lceil \log_2 M_R^m \rceil$ , m=1,2, ...,$M$ |

In a method for information transmission provided by the present application, excessive index information is avoided to be reported and signaling reporting overhead is reduced by reporting indexes associated with the top-K reference signal resources.

In some embodiments, transmitting the indexes associated with partial reference signal resources to the network device and mapping the measurement results in the mapping order includes:

measuring the reference signal resources at different measurement time instances to obtain multiple measurement results;

selecting a first reference measurement result from the multiple measurement results;

determining differences between remaining measurement results among the measurement results other than the first reference measurement result and the first reference measurement result; and

transmitting, to the network device, the first reference measurement result, a first index and a second index associated with a reference signal resource corresponding to the first reference measurement result, and an index of measurement time instances associated with the reference signal resource corresponding to the first reference measurement result, and mapping the differences in a mapping order.

In an embodiment of the present application, the UE reports RSRPs of beam pairs of Set B or Set A at N time instances.

When a BM-Case 2 temporal domain beam prediction use case is considered, the base station can configure the UE to report beam measurement information for N time instances at a time. It is assumed that Set B at a $n^{\text{th}}$ time instance corresponds to $M_n$ resource sets, and the $m^{\text{th}}$ resource set at the $n^{\text{th}}$ time instance includes $M_R^{mn}$ resources.

The first reference measurement result being the largest value is taken as an example. The UE reports L1-RSRP of beam pairs of Set B or Set A at N time instances. The UE sorts measurement results of reference signal resources in all sets at all time instances and selects the largest measurement result, referred to as measurement value 7. The UE then processes measurement results of remaining reference signal resources by subtracting measurement value 7 from measurement results of the remaining reference signal resources to obtain differences, referred as to measurement values 8. In an embodiment, the UE quantizes the measurement value 7 into $L$ bits and the measurement values 8 into $Q$ bits. When the UE reports, reported content includes quantized measurement value 7, an index of a time instance corresponding to the measurement value 7, index information of a reference signal resource set and index information of a reference signal resource corresponding to the measurement value 7 and quantized measurement values 8 and the quantized measurement values 8 are arranged in an order of index or identification of the time instances, index or identification of the corresponding reference signal resource set and index or identification of the reference signal resource.

In a method for information transmission provided by the present application, for multiple measurement results determined at different measurement time instances, excessive index information is avoided to be reported and signaling reporting overhead is reduced by reporting indexes associated with partial reference signal resources and sequentially reporting other measurement results or differential measurement results.

In some embodiments, transmitting, to the network device, the first reference measurement result, the first index and the second index associated with the reference signal resource corresponding to the first reference measurement result, and the index of measurement time instance associated with the reference signal resource corresponding to the first reference measurement result, and mapping the differences in the mapping order includes:

transmitting, to the network device, the first reference measurement result, the first index and the second index associated with the reference signal resource corresponding to the first reference measurement result, and the index of the measurement time instances associated with the reference signal resource corresponding to the first reference measurement result and mapping a difference corresponding to each reference signal resource in a third order of the indexes of the measurement time instances, a first order of first indexes associated with reference signal resources corresponding to the differences and a second order of second indexes associated with the reference signal resources corresponding to the differences.

In this embodiment of the present application, the UE transmits, to the network device, the first reference measurement result, the first index and the second index associated with the reference signal resource corresponding to the first reference measurement result, and the indexes of the measurement time instances associated with the reference signal resource corresponding to the first reference measurement result and maps a difference corresponding to each reference signal resource in a third order of the index of the measurement time instance, a first order of first indexes associated with reference signal resources corresponding to the differences and a second order of second indexes associated with the reference signal resource corresponding to the differences.

For example, it is assumed that each of the first order, the second order, and the third order is an ascending order, the UE sorts the measurement results of reference signal resources in all sets at all time instances and selects the largest measurement result, referred to as a measurement value 7. The UE then processes measurement results of remaining reference signal resources by subtracting measurement value 7 from measurement results of the remaining reference signal resources to obtain differences, referred as to measurement values 8. In an embodiment, the UE quantizes the measurement value 7 into $L$ bits and the measurement values 8 into Q bits. When the UE reports, reported content includes quantized measurement value 7, an index of a time instance corresponding to the measurement value 7, index information of a reference signal resource set and index information of a reference signal resource corresponding to the measurement value 7 and quantized measurement values 8 and the quantized measurement values 8 are arranged in an order of index or identification of the time instances, index or identification of the corresponding reference signal resource set and index or identification of the reference signal resource. That is, the UE reports the largest L1-RSRP measured at N time instances and an index of the corresponding time instance, an index of the corresponding resource set, and an index of the corresponding resource. Differences between the RSRPs of the remaining reference signal resources and the largest L1-RSRP are reported in an order of 1st, 2nd, ..., $N^{th}$ time instance, 1st, 2nd, ..., $M_n^{th}$ resource set, and 1st, 2nd, ..., $M_R^{mn\,th}$ resource. The largest L1-RSRP is quantized into $L$ bits, and the differences among the RSRPs of the remaining reference signal resources and the largest L1-RSRP are quantized into $Q$ bits. A reporting format is as shown in Table 5.

Table 5

| CSI report number | CSI fields | # of bits |
|---|---|---|
| CSI report #n | Indicator of the time instance corresponding to the | $\lceil \log_2 N \rceil$ |
|  | largest reported L1-RSRP |  |

(continued)

| CSI report number | CSI fields | # of bits |
|---|---|---|
| | Indicator of the resource set corresponding to the largest reported L1-RSRP | $\max \lceil \log_2 M_n \rceil$ n=1,2, ...,N |
| | CRI or SSBRI of the resource corresponding to the largest reported L1-RSRP | $\max \lceil \log_2 M_R^{mn} \rceil$ n=1,2, ...,N; m=1,2,...,M |
| | the largest L1-RSRP | L |
| | Differential RSRP of 1st CRI or SSBRI of the 1st resource set of 1st time instance | Q |
| | ... | ... |
| | Differential RSRP of $M_R^{11\,\text{th}}$ CRI or SSBRI of the 1st resource set of 1st time instance | Q |
| | ... | |
| | Differential RSRP of 1st CRI or SSBRI of the $M_1{}^{\text{th}}$ resource set of 1st time instance | Q |
| | ... | ... |
| | Differential RSRP of $M_R^{21\,\text{th}}$ CRI or SSBRI of the $M_1{}^{\text{th}}$ resource set of 1st time instance | Q |
| | ... | ... |
| | Differential RSRP of 1st CRI or SSBRI of the 1st resource set of $N^{\text{th}}$ time instance | Q |
| | ... | ... |
| | Differential RSRP of $M_R^{1N\,\text{th}}$ CRI or SSBRI of the 1st resource set of $N^{\text{th}}$ time instance | Q |
| | ... | ... |
| | Differential RSRP of 1st CRI or SSBRI of the $M_N{}^{\text{th}}$ resource set of $N^{\text{h}}$ time instance | Q |
| | ... | ... |
| | Differential RSRP of $M_R^{MN\,\text{th}}$ CRI or SSBRI of the $M_N{}^{\text{th}}$ resource set of $N^{\text{th}}$ time instance | Q |

In a method for information transmission provided by the present application, for multiple measurement results determined at different measurement time instances, excessive index information is avoided to be reported and signaling reporting overhead is reduced by reporting indexes associated with partial reference signal resources and sequentially reporting other measurement results or differential measurement results.

In some embodiments, transmitting the indexes associated with partial reference signal resources to the network device and mapping the measurement results in the mapping order includes:

measuring the reference signal resources at different measurement time instances to obtain multiple measurement results;

selecting a first reference measurement result from the multiple measurement results obtained at each measurement time instance;

determining, for each measurement time instance, differences between remaining measurement results among the multiple measurement results other than the first reference measurement result and the first reference measurement result; and

transmitting, to the network device, the first reference measurement result, and a first index and a second index associated with a reference signal resource corresponding to the first reference measurement result, and mapping the differences in a mapping order.

In an embodiment of the present application, the UE reports RSRPs of beam pairs of Set B or Set A at N time instances.

When a BM-Case 2 temporal domain beam prediction use case is considered, the base station can configure the UE to report beam measurement information for N time instances at a time. It is assumed that Set B at a $n^{th}$ time instance corresponds to $M_n$ resource sets, and a $m^{th}$ resource set at the $n^{th}$ time instance includes $M_R^{mn}$ resources.

The first reference measurement result being the largest value is taken as an example. The UE measures measurement reference signal resources corresponding to each time instance and sorts measurement results of the measurement reference signal resources at each time instance. For each measurement time instance, the largest measurement result is selected. These N time instances correspond to the N largest measurement results, referred to as measurement values 9. For remaining measurement results at each time instance, the UE subtracts the measurement value 9 corresponding to each time instance from remaining measurement results at each time instance, referred to as measurement values 10. In an embodiment, the UE quantizes the measurement values 9 into L bits and the measurement values 10 into Q bits, respectively. When reporting, the UE arranges the measurement results at N time instances in the order of $1^{st}$, $2^{nd}$, ..., $N^{th}$. Reported content at each time instance includes quantized measurement value 9, an index of reference signal resource set and an index of reference signal resource corresponding to the measurement value 9, and quantized measurement values 10 and the quantized measurement values 10 are arranged in an order of indexes or identifications of the corresponding reference signal resource sets and indexes or identifications of the reference signal resources.

In a method for information transmission provided by the present application, for multiple measurement results determined at different measurement time instances, excessive index information is avoided to be reported and signaling reporting overhead is reduced by reporting indexes associated with partial reference signal resources and sequentially reporting other measurement results or differential measurement results.

In some embodiments, transmitting, to the network device, the first reference measurement result, and the first index and the second index associated with the reference signal resource corresponding to the first reference measurement result, and mapping the differences in the mapping order includes:

transmitting, to the network device, the first reference measurement result, and the first index and the second index associated with the reference signal resource corresponding to the first reference measurement result, and mapping a difference corresponding to each reference signal resource in a third order of indexes of measurement time instances, a first order of first indexes associated with reference signal resources corresponding to the differences and a second order of second indexes associated with the reference signal resource corresponding to the differences.

In an embodiment of the present application, the UE transmits, to the network device, the first reference measurement result, a first index and a second index associated with the reference signal resource corresponding to the first reference measurement result, and maps a difference corresponding to each reference signal resource in a third order of indexes of measurement time instances, a first order of first indexes associated with reference signal resources corresponding to the differences and a second order of second indexes associated with the reference signal resources corresponding to the differences.

For example, it is assumed that each of the first order, the second order, and the third order is an ascending order. When reporting, the UE arranges the measurement results at N time instances in the order of $1^{st}$, $2^{nd}$, ..., $N^{th}$. Reported content at each time instance includes quantized measurement value 9, an index of reference signal resource set and an index of reference signal resource corresponding to the measurement value 9 and quantized measurement values 10 and the quantized measurement values 10 are arranged in an order of indexes or identifications of the corresponding reference signal resource sets and indexes or identifications of the reference signal resources. That is, the UE reports sequentially the largest L1-RSRP measured at each time instance, an index of the corresponding resource set, and an index of the corresponding resource in an order of $1^{st}$, $2^{nd}$, ..., $N^{th}$. Differences between the RSRPs of the remaining reference signal resources and the largest L1-RSRP at each time instance are reported in an order of $1^{st}$, $2^{nd}$, ..., $M_n^{th}$ resource set, and $1^{st}$, $2^{nd}$, ..., $M_R^{mn\,th}$ resource. The largest L1-RSRP at each time instance is quantized into L bits, and the differences between the RSRPs of the remaining reference signal resources and the largest L1-RSRP at each time instance are quantized into Q bits. For the reporting format, Table 1 can be extended to N time instances and is not further described in detail here.

In a method for information transmission provided by the present application, for multiple measurement results determined at different measurement time instances, excessive index information is avoided to be reported and signaling reporting overhead is reduced by reporting indexes associated with partial reference signal resources and sequentially reporting other measurement results or differential measurement results.

In some embodiments, transmitting the indexes associated with partial reference signal resources to the network device and mapping the measurement results in the mapping order includes:

measuring reference signal resources at different measurement time instances to obtain multiple measurement results;

selecting, for each measurement time instance, a second reference measurement result from multiple measurement results corresponding to each reference signal resource set;

determining, for each measurement time instance, differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

In an embodiment of the present application, the UE reports RSRPs of beam pairs of Set B or Set A at $N$ time instances.

When a BM-Case 2 temporal domain beam prediction use case is considered, the base station can configure the UE to report beam measurement information for N time instances at a time. It is assumed that Set B at a $n^{th}$ time instance corresponds to $M_n$ resource sets, and the $m^{th}$ resource set at the $n^{th}$ time instance includes $M_R^{mn}$ resources.

The first reference measurement result being the largest value is taken as an example. The UE measures measurement reference signal resources corresponding to each time instance and sorts measurement results of each measurement reference signal resource at each time instance. For each of the $M$ reference signal resource sets configured by the network at each time instance, the UE sorts measurement results of reference signal resources in each set and selects the largest measurement result in each set, referred to as the $M$ measurement values 3. For each set, the UE processes the measurement results of remaining reference signal resources in the set by subtracting measurement value 3 corresponding to the set from measurement results of the remaining reference signal resources in the set to obtain differences, referred as to measurement values 4.

In a method for information transmission provided by the present application, for multiple measurement results determined at different measurement time instances, excessive index information is avoided to be reported and signaling reporting overhead is reduced by reporting indexes associated with partial reference signal resources and sequentially reporting other measurement results or differential measurement results.

In some embodiments, transmitting, to the network device, the second reference measurement result corresponding to each reference signal resource set and the second index associated with the reference signal resource corresponding to the second reference measurement result, and mapping the differences in a mapping order includes: transmitting, to the network device, the second reference measurement result corresponding to each reference signal resource set and the second index associated with the reference signal resource corresponding to the second reference measurement result, and mapping a difference corresponding to each reference signal resource in a third order of indexes of the measurement time instances, a first order of first indexes associated with reference signal resources corresponding to the differences and a second order of second indexes associated with the reference signal resource corresponding to the differences.

In an embodiment of the present application, the UE transmits, to the network device, the second reference measurement result corresponding to each reference signal resource set and a second index associated with a reference signal resource corresponding to the second reference measurement result, and maps a difference corresponding to each reference signal resource in a third order of indexes of the measurement time instances, a first order of first indexes associated with reference signal resources corresponding to the differences and a second order of second indexes associated with the reference signal resources corresponding to the differences.

For example, it is assumed that each of the first order, the second order, and the third order is an ascending order. when reporting, the UE reports in an order of $1^{st}$, $2^{nd}$, ..., $N^{th}$ time instance. For each time instance, the UE reports the largest L1-RSRP and corresponding index of each resource set in the order of $1^{st}$, $2^{nd}$, ..., $M_n^{th}$ resource set and reports RSRPs of the remaining resources in the resource set sequentially. That is, for each time instance, the UE reports the largest L1-RSRP and an index of the resource corresponding to the largest L1-RSRP in each resource set in an order of $1^{st}$, $2^{nd}$, ..., $M^{th}$ resource set. Differences between the RSRPs of the remaining reference signal resources in each resource set and the largest L1-RSRP measured in that resource set is reported in an order of $1^{st}$, $2^{nd}$, ..., $M_R^{m\,th}$ resource set. The largest L1-RSRP in each resource set is quantized into $L$ bits, and the differences among the RSRPs of the remaining reference signal resources and the largest L1-RSRP are quantized into $Q$ bits. For the reporting format, Table 2 can be extended to N time instances and is not further described in detail here.

In a method for information transmission provided by the present application, for multiple measurement results determined at different measurement time instances, excessive index information is avoided to be reported and signaling reporting overhead is reduced by reporting indexes associated with partial reference signal resources and sequentially reporting other measurement results or differential measurement results.

In some embodiments, transmitting the indexes associated with partial reference signal resources to the network device and mapping the measurement results in the mapping order includes:

measuring the reference signal resources at different measurement time instances to obtain multiple measurement results;

selecting, for each measurement time instance, a first reference measurement result from the multiple measurement results, and selecting second reference measurement results from multiple measurement results corresponding to second reference signal resource sets other than a first reference signal resource set corresponding to the first reference measurement result;

determining, for each measurement time instance, a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In an embodiment of the present application, the UE reports RSRPs of beam pairs of Set B or Set A at $N$ time instances.

In case that a BM-Case 2 temporal domain beam prediction use case is considered, the base station can configure the UE to report beam measurement information for N time instances at a time. It is assumed that Set B at a $n^{th}$ time instance corresponds to $M_n$ resource sets, and the $m^{th}$ resource set at the $n^{th}$ time instance includes $M_R^{mn}$ resources.

The first reference measurement result being the largest value is taken as an example. For each time instance, the UE first sorts the measurement results of all reference signal resources in all sets and selects the largest measurement result, referred to as measurement values 1. For the reference signal resource set corresponding to measurement value 1 (referred to as reference signal resource set $m$), measurement results of the remaining reference signal resources in the set are processed. For example, the measurement value 1 in the set is subtracted from measurement results of the remaining reference signal resources in the set to obtain differences, referred to as measurement values 2. For reference signal resource sets other than set m, measurement value 1 is subtracted from the largest measurement result of each set to obtain differences, referred to as measurement values 5. The measurement values 5 corresponding to the set is subtracted from the measurement results of the remaining reference signal resources in the set to obtain differences, referred to as measurement values 6. Alternatively, the UE quantizes the measurement values 1 into L bits, respectively, the measurement values 2 and 6 into $Q_2$ bits respectively, and the measurement values 5 into $Q_1$ bits. When the UE reports, the reported content includes quantized measurement value 1, index information of the reference signal resource set and index information of the reference signal resource corresponding to measurement value 1, quantized measurement values 2, quantized measurement value 5, index information of the reference signal resource corresponding to measurement value 5, and quantized measurement values 6. The quantized measurement values 2 are arranged in the order of the reference signal resource indexes or identifications within the set. The quantized measurement value 5 in the measurement results for $M$-1 sets is reported in the order of $1^{st}$, $2^{nd}$, ..., $M^{th}$. The quantized measurement values 6 for each set are arranged in an order of indexes or identifications of reference signal resources in the set.

In a method for information transmission provided by the present application, for multiple measurement results determined at different measurement time instances, excessive index information is avoided to be reported and signaling reporting overhead is reduced by reporting indexes associated with partial reference signal resources and sequentially reporting other measurement results or differential measurement results.

In some embodiments, transmitting, to the network device, the first reference measurement result, the first index and the second index associated with the reference signal resource corresponding to the first reference measurement result, and the second index associated with the reference signal resource corresponding to the first difference, and mapping the first difference, the second difference, and the third difference in a mapping order includes:

transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

In an embodiment of the present application, the UE transmits, to the network device, the first reference measurement result and the first index and the second index associated with the reference signal resource corresponding to the first reference measurement result, and the second index associated with a reference signal resource corresponding to the first difference, and maps the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

For example, it is assumed that each of the first order, the second order, and the third order is an ascending order, the UE reports in an order of 1st, 2nd, ..., $N$th time instance. For each time instance, two-stage differential reporting is employed. The UE reports the largest measured L1-RSRP and indexes of the resource set and indexes of the resource corresponding to the largest measured L1-RSRP. Differences between the RSRPs of the remaining reference signal resources in the resource set and the largest L1-RSRP are reported in an order of 1st, 2nd, .... For the remaining resource sets, differences are reported in an order of 1st, 2nd, ..., $M$th. For each of these resource sets, an index of the resource corresponding to the largest L1-RSRP in the resource set and a difference between the largest L1-RSRP in the current resource set and the largest L1-RSRP of all resource sets is reported. Differences between the L1-RSRP of the remaining reference signal resources in the current resource set and the largest L1-RSRP in the current resource set are reported in an order of 1st, 2nd, ..., $M_R^{m \, \text{th}}$. For the reporting format, Table 3 can be extended to N time instances and is not further described in detail here.

In a method for information transmission provided by the present application, for multiple measurement results determined at different measurement time instances, excessive index information is avoided to be reported and signaling reporting overhead is reduced by reporting indexes associated with partial reference signal resources and sequentially reporting other measurement results or differential measurement results.

In some embodiments, transmitting the indexes associated with partial reference signal resources to the network device and mapping the measurement results in the mapping order includes:

measuring the reference signal resources at different measurement time instances to obtain multiple measurement results;

selecting a first reference measurement result from the multiple measurement results; and selecting a second reference measurement result from second measurement time instances other than a first measurement time instance corresponding to the first reference measurement result;

determining a first difference between each of the second reference measurement results and the first reference measurement result, determining, for each measurement time instance, a second difference between remaining measurement results corresponding to the first reference signal resource set other than the first reference measurement result and the first reference measurement result or a third difference between remaining measurement results other than the first difference and the first difference; and

transmitting, to the network device, the first reference measurement result, a first index and a second index associated with a reference signal resource corresponding to the first reference measurement result, a first index and a second index associated with a reference signal resource corresponding to the first difference, and an index of a measurement time instance associated with a reference signal resource corresponding to the first reference measurement result and mapping the first difference, the second difference, and the third difference in a mapping order.

In an embodiment of the present application, the UE reports RSRPs of beam pairs of Set B or Set A at N time instances.

When a BM-Case 2 temporal domain beam prediction use case is considered, the base station can configure the UE to report beam measurement information for N time instances at a time. It is assumed that Set B at a $n^{th}$ time instance corresponds to $M_n$ resource sets, and the $m^{th}$ resource set at the $n^{th}$ time instance includes $M_R^{mn}$ resources.

The first reference measurement result being the largest value is taken as an example. The UE reports L1-RSRP of beam pairs of Set B or Set A at N time instances. The UE sorts measurement results of reference signal resources in all sets at all time instances and selects the largest measurement result, referred to as measurement value 7. The UE then selects a largest measurement result from all remaining time instances other than the time instance where the largest measurement result is selected previously and obtain differences by subtracting the measurement value 7 from the largest measurement result selected at each of all remaining time instances, and the differences are referred to as measurement values 8. For each time instance, the UE obtains differences by subtracting the largest measurement result corresponding to each time instance from the measurement results of all remaining reference signal resources and the differences are referred to as measurement values 9. Alternatively, the UE quantizes the measurement value 7 into L bits and the measurement values 8 into $Q_1$ bits, and the measurement values 9 into $Q_2$ bits. When the UE reports, the reported content includes the quantized measurement value 7, an index of a time instance, index information of a reference signal resource set and index information of a reference signal resource corresponding to measurement value 7, the quantized measurement value 8, index information of a reference signal resource set and index information of a reference signal resource corresponding to the measurement value 8, and the quantized measurement value 9. The quantized measurement values 9 are arranged in an order of index or identification of the time instance, index or identification of the corresponding reference signal resource set and index or identification of the reference signal resource.

In a method for information transmission provided by the present application, for multiple measurement results determined at different measurement time instances, excessive index information is avoided to be reported and signaling reporting overhead is reduced by reporting indexes associated with partial reference signal resources and sequentially reporting other measurement results or differential measurement results.

In some embodiments, transmitting, to the network device, the first reference measurement result, the first index and a second index associated with the reference signal resource corresponding to the first reference measurement result, the first index and the second index associated with a reference signal resource corresponding to the first difference, and the index of a measurement time instance associated with the reference signal resource corresponding to the first reference measurement result and mapping the first difference, the second difference, and the third difference in the mapping order includes:

transmitting, to the network device, the first reference measurement result and the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

In an embodiment of the present application, the UE transmits, to the network device, the first reference measurement result and the first index and the second index associated with the reference signal resource corresponding to the first reference measurement result, the first index and the second index associated with the reference signal resource corresponding to the first difference, and the index of a measurement time instance associated with the reference signal resource corresponding to the first reference measurement result, and maps the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

For example, it is assumed that each of the first order, the second order, and the third order is an ascending order, the UE sorts the measurement results of reference signal resources in all sets at all time instances and selects the largest measurement result, referred to as a measurement value 7. The UE then selects a largest measurement result from all remaining time instances other than the time instance where the largest measurement result is selected previously and obtain differences by subtracting the measurement value 7 from the largest measurement result selected at each of all remaining time instances, and the differences are referred to as measurement values 8. For each time instance, the UE obtains differences by subtracting the largest measurement result corresponding to each time instance from the measurement results of all remaining reference signal resources and the differences are referred to as measurement values 9. Alternatively, the UE quantizes the measurement value 7 into L bits and the measurement values 8 into $Q_1$ bits, and the measurement values 9 into $Q_2$ bits. When the UE reports, the reported content includes the quantized measurement value 7, an index of a time instance, index information of a reference signal resource set and index information of a reference signal resource corresponding to measurement value 7, the quantized measurement value 8, index information of a reference signal resource set and index information of a reference signal resource corresponding to the measurement value 8, and the quantized measurement value 9. The quantized measurement values 9 are arranged in an order of index or identification of the time instance, index or identification of the corresponding reference signal resource set and index or identification of the reference signal resource.

That is, the UE reports the largest L1-RSRP measured at $N$ time instances and the index of the corresponding time instance, the index of the corresponding resource set, and the index of the corresponding resource, as well as the index of the resource set and the index of the resource corresponding to the largest L1-RSRP selected at each of remaining time instances other than the time instance where the largest measurement result is selected. Differences between the largest measurement result selected at each of remaining time instances and the largest measurement result selected at all time instances, or differences between RSRPs of the remaining reference signal resources and the largest L1-RSRP, is reported sequentially in the order of $1^{st}$, $2^{nd}$, ..., $N^{th}$ time instance, $1^{st}$, $2^{nd}$, ..., $M_n^{th}$ resource set, and $1^{st}, 2^{nd}, \ldots, M_R^{mn\,th}$ resource.

In a method for information transmission provided by the present application, for multiple measurement results determined at different measurement time instances, excessive index information is avoided to be reported and signaling reporting overhead is reduced by reporting indexes associated with partial reference signal resources and sequentially reporting other measurement results or differential measurement results.

It should be noted that the reporting orders in Tables 1 to 5 can be adjusted, for example, the index of each resource set or resource is firstly reported, followed by the RSRP or differential RSRP values.

In some embodiments, the UE reports RSRPs of DL Tx beams of Set B or Set A at $N$ time instances/indexes of top-K DL Tx beams.

The above embodiment describes the reporting content for beam pair prediction using an AI/ML model. If a DL Tx beam (Tx beam) is predicted using the AI/ML model, information of the Rx beam in the beam pair is not required to be reported; only resource set level information is required to be reported. For example, when RSRPs of all Tx beams of Set B or Set A are reported, the scenario corresponding to Table 1 can be updated to Table 6.

Table 6

| CSI report number | CSI fields | # of bits |
|---|---|---|
| $\lceil \log_2 M \rceil$ <br><br> CSI report #n | Indicator of the resource set corresponding to the largest reported L1-RSRP | |
| | the largest L1-RSRP | $L$ |
| | Differential largest RSRP of the $1^{st}$ resource set | $Q$ |
| | Differential largest RSRP of the $2^{nd}$ resource set | $Q$ |
| | ... | |
| | Differential largest RSRP of the $M^{th}$ resource set | $Q$ |

In addition, the reporting formats corresponding to the scenarios corresponding to Tables 2 through 5 can be similar to the method for updating the scenario corresponding to Table 1 to Table 6, and are not further described in detail here.

In some embodiments, the UE reports RSRPs of DL Tx beams of Set B or Set A at $N$ time instances/indexes of top-K DL Tx beams.

The above embodiment describes the reporting content for beam pair prediction using an AI/ML model. If a DL Tx beam (Tx beam) is predicted using the AI/ML model, information of the Rx beam in the beam pair is not required to be reported; only resource set level information is required to be reported. For the scenario corresponding to Table 1, reporting RSRPs for all Tx beams of Set B or Set A is taken as an example, the reporting format for that scenario can be updated to Table 6.

The above embodiments are described for a scenario where a base station configures M resource sets, with the $m^{th}$ resource set including $M_R^m$ resources. For a scenario where a base station configures M resources, with the $m^{th}$ resource configured with $M_R^m$ repetition, indexes of the resource sets and indexes of the resources in the reporting format described in the above embodiment need to be replaced with the indexes of the resources and repetition index, respectively. For the scenario corresponding to Table 1, UE reporting RSRPs for all beam pairs of Set B or Set A is taken as an example, the reporting format for that scenario can be updated to Table 7.

Table 7

| CSI report number | CSI fields | # of bits |
|---|---|---|
| CSI report #n | CRI or SSBRI of the resource corresponding to the largest reported L1-RSRP | |
| | Indicator of the repetition corresponding to the largest reported L1-RSRP | $\max\lceil \log_2 M_R^m \rceil$ , m=1,2, ..., M |
| | the largest L1-RSRP | L |
| | Differential RSRP of 1st repetition of the 1st CRI or SSBRI | Q |
| | Differential RSRP of 2nd repetition of the 1st CRI or SSBRI | Q |
| | ... | Q |
| | Differential RSRP of 1st repetition of the 2nd CRI or SSBRI | Q |
| | Differential RSRP of 2nd repetition of the 2nd CRI or SSBRI | Q |
| | ... | |

It should be noted that in the embodiments of the present application, when reporting measurement results (including the first reference measurement result, the second reference measurement results, etc.) and/or differential measurement results (including the first difference, the second difference, the third difference, etc.), the UE may directly report the measurement values and/or differential measurement values, or quantize the measurement values and/or differential measurement values and then report the quantized measurement values and/or differential measurement values. The specific quantization method is not detailed in the present application.

In addition, it should be noted that in the embodiments of the present application, when reporting measurement results (including the first reference measurement result, the second reference measurement results, etc.) and/or differential measurement results (including the first difference, the second difference, the third difference, etc.), the UE reports them in single CSI report. That is, the information above is reported in the single CSI report in the mapping order described in the above embodiments.

The method in the above embodiment is further described in conjunction with several specific examples below.

Embodiment 1:

In the embodiment, a base station predicts top-3 beam pairs among the 128 beam pairs of Set A based on RSRPs of 32 beam pairs of Set B. 32 beam pairs of Set B consist of 8 Tx beams (Tx beams 1, 5, 9, 13, 17, 21, 25, 29) at a base station side and the Rx beams 1, 2, 3, and 4 at a UE side. 128 beam pairs of Set A consist of all 32 Tx beams at the base station side and the four Rx beams at a UE side. The base station configures 32 CSI-RS resource sets corresponding to Set A. Each resource set includes 4 CSI-RSs and indicates the resource set and resource corresponding to Set B. The base station configures the UE to report the RSRPs of Set B and indexes of the top-two beam pairs of Set A.

It is assumed that the UE uses the reporting format combined with Tables 1 and 4, where the largest L1-RSRP is quantized using 7 bits and differential L1-RSRP is quantized using 4 bits, that is, the current RSRP quantization rules are followed, the reported content is shown in Table 8.

In Table 8, when the UE reports the index of the top-2 beam pairs of Set A, Set A corresponds to 32 Tx beams and 4 Rx beams. Therefore, 5 bits are required to indicate the Tx beam of beam pairs of Set A and 2 bits are required to indicate the Rx beam of beam pairs of Set A. Set B corresponds to 8 Tx beams and 4 Rx beams. Therefore, 3 bits are required to indicate the Tx beam of beam pairs of Set B and 2 bits are required to indicate the Rx beam of beam pairs in Set B.

Table 8

| CSI report number | CSI fields | Reported bits | # of bits |
|---|---|---|---|
| | Resource set indicator of the resource corresponding to the largest L1-RSRP of Set A | 00000 | 5 |

(continued)

| CSI report number | CSI fields | Reported bits | # of bits |
|---|---|---|---|
| CSI report #n | CRI of the resource corresponding to the largest L1-RSRP of Set A | 11 | 2 |
| | Resource set indicator of the resource corresponding to the Top-2 largest L1-RSRP of Set A | 00001 | 5 |
| | CRI of the resource corresponding to the Top-2largest L1-RSRP of Set A | 10 | 2 |
| | Indicator of the resource set corresponding to the largest reported L1-RSRP of Set B | 001 | 3 |
| | CRI of the resource corresponding to the largest reported L1-RSRP of Set B | 01 | 2 |
| | the largest L1-RSRP of Set B | 0100101 | 7 |
| | Differential RSRP of 1st CRI of the 1st resource set of Set B | 0001 | 4 |
| | ... | | |
| | Differential RSRP of 4th CRI of the 8th resource set of Set B | 1011 | 4 |

From Table 8, the top-2 beam pairs of Set A reported by the UE are Tx beam 1 (00000 corresponds to the first Tx beam of Set A)-Rx beam4 (11 corresponds to a fourth Rx beam of Set A), Tx beam 2 (00001)-Rx beam3 (10), and the largest L1-RSRP among the 32 beam pairs of Set B corresponds to Tx beam 5 (001 corresponds to the second Tx beam of Set B)-Rx beam 2 (01 corresponds to the second Rx beam of Set B). The dBm values corresponding to the largest L1-RSRP and the differential L1-RSRP can be obtained based on the quantization rules of the current protocol.

Embodiment 2:

In the embodiment, the assumptions and reference signal resource configuration methods of Set B and Set A in embodiment 2 are consistent with those in embodiment 1. The base station configures the UE to report measurement results of Set B using the method shown in Table 2 for base station-side model inference, where the largest L1-RSRP is quantized using 7 bits and differential L1-RSRP is quantized using 4 bits, that is, the current RSRP quantization rules are followed, the reported content is shown in Table 9.

Table 9

| CSI report number | CSI fields | Reported bits | # of bits |
|---|---|---|---|
| CSI report #n | CRI of the resource corresponding to the largest reported L1-RSRP of the 1st resource set | 01 | 2 |
| | the largest L1-RSRP of the 1st resource set | 0011011 | 7 |
| | Differential RSRP of 1st CRI of the 1st resource set | 1100 | 4 |
| | Differential RSRP of 3rd CRI of the 1st resource set | 0011 | 4 |
| | Differential RSRP of 4th CRI of the 1st resource set | 0111 | 4 |
| | CRI of the resource corresponding to the largest reported L1-RSRP of the 2nd resource set | 10 | 2 |
| | the largest L1-RSRP of the 2nd resource set | 1000011 | 7 |
| | Differential RSRP of 1st CRI of the 2nd resource set | 0101 | 4 |
| | Differential RSRP of 2nd CRI of the 2nd resource set | 1001 | 4 |
| | Differential RSRP of 4th CRI of the 2nd resource set | 1000 | 4 |
| | ... | | |
| | CRI of the resource corresponding to the largest reported L1-RSRP of the 8th resource set | 00 | 2 |

(continued)

| CSI report number | CSI fields | Reported bits | # of bits |
|---|---|---|---|
| | the largest L1-RSRP of the 8th resource set | 1001100 | 7 |
| | Differential RSRP of 2nd CRI of the 8th resource set | 0010 | 4 |
| | Differential RSRP of 3rd CRI of the 8th resource set | 1010 | 4 |
| | Differential RSRP of 4th CRI of the 8th resource set | 0111 | 4 |

In Table 9, the UE sequentially reports a resource ID (i.e., Rx beam ID) and corresponding L1-RSRP for each resource set (i.e., Tx beam) corresponding to Set B. Since beam pairs in Set B correspond to 4 Rx beams, 2 bits are sufficient to represent the resource corresponding to the largest L1-RSRP in each set. Differential L1-RSRPs of resources other than the largest L1-RSRP are reported in the order 1st, 2nd, ... As shown in Table 9, the largest L1-RSRP of resource set 1 corresponds to the second resource (01), and the differential L1-RSRPs of the first, third, and fourth resources are reported in sequence.

Embodiment 3:

In this embodiment, the base station configures the reference signal resources of Set A using the method in embodiment 1 and configures two Set B patterns, such as:

Set B Pattern 1: Tx beam{1,5,9,13,17,21,25,29}, Rx beam{1,2,3,4}

Set B Pattern2: Tx beam{2,6,10,14,18,22,26,30}, Rx beam{1,2,3,4}

The base station configures the UE to select the Set B pattern from the two patterns described above based on the measurement results. The base station then reports measurement results of Set B using the two-stage differential method described in Table 3 for base station-side model training, and indicates the reported Set B pattern. The largest L1-RSRP in the two-stage differential is quantized with 7 bits, the differential L1-RSRP of the largest L1-RSRP of the remaining resource sets and the largest L1-RSRP is quantized with 4 bits, and the differential L1-RSRP of the remaining resources in each resource set and the largest L1-RSRP of the resource set is also quantized with 4 bits. Contents reported by the UE is shown in Table 10.

Table 10

| CSI report number | CSI fields | Reported bits | # of bits |
|---|---|---|---|
| CSI report #n | Pattern id | 0 | 1 |
| | Indicator of the resource set corresponding to the largest reported L1-RSRP | 001 | 3 |
| | CRI of the resource corresponding to the largest reported L1-RSRP | 01 | 2 |
| | the largest L1-RSRP | 0100101 | 7 |
| | Differential RSRP of 1st CRI of the reported resource set | 0001 | 4 |
| | Differential RSRP of 3rd CRI of the reported resource set | 0101 | 4 |
| | Differential RSRP of 4th CRI of the | 1010 | 4 |
| | reported resource set | | |
| | CRI of the resource corresponding to the largest L1-RSRP of the 1st resource set | 10 | 2 |
| | Differential largest L1-RSRP of the 1st resource set | 1001 | 4 |
| | Differential RSRP of 1st CRI of the 1st resource set | 0001 | 4 |
| | Differential RSRP of 2nd CRI of the 1st resource set | 0000 | 4 |
| | Differential RSRP of 4th CRI of the 1st resource set | 1010 | 4 |
| | ... | | |

(continued)

| CSI report number | CSI fields | Reported bits | # of bits |
|---|---|---|---|
| | CRI of the resource corresponding to the largest L1-RSRP of the 8th resource set | 11 | 2 |
| | Differential largest L1-RSRP of the 8th resource set | 0011 | 4 |
| | Differential RSRP of 1st CRI of the 8th resource set | 1010 | 4 |
| | Differential RSRP of 2nd CRI of the 8th resource set | 1111 | 4 |
| | Differential RSRP of 3rd CRI of the 8th resource set | 0011 | 4 |

In Table 10, a Set B pattern ID reported by the UE is 0, that is, the UE reports the measurement result of Set B pattern 1 (assuming that bit 0 corresponds to pattern 1 and bit 1 corresponds to pattern 2). The largest L1-RSRP reported by the UE corresponds to Tx beam 5 (001) - Rx beam 2 (01), and the differential L1-RSRP of remaining beam pairs corresponding to the resource set or the differential L1-RSRP of Tx beam relative to the largest L1-RSRP are also reported in sequence. L1-RSRP values of remaining resource sets (i.e., the resource sets corresponding to Tx beams 1, 9, 13, 17, 21, 25, and 29) of Set B other than the resource set corresponding to Tx beam 5, are reported sequentially. An index of a resource corresponding to the largest L1-RSRP in each resource set and the differential L1-RSRP between the largest L1-RSRP in each resource set and the largest L1-RSRP of Set B are reported firstly and differential L1-RSRP values of the remaining resources corresponding to the resource set and the largest L1-RSRP of that resource set are then reported.

Embodiment 4

In this embodiment, the base station predicts the optimal beam pair of Set A at two future time instances based on the measurement results of beam pairs of Set B at two time instances. For example, the optimal beam pair of Set A at time instance 3 and time instance 4 is predicted based on the measurement results of Set B at time instance 1 and time instance 2. At time instance 1, the beam pair pattern of Set B consists of Tx beams 1, 5, 9, 13, 17, 21, 25, and 29, and Rx beams 1, 2, 3, and 4 at a UE side. At time instance 2, the beam pair pattern of Set B consists of Tx beams 2, 6, 10, 14, 18, 22, 26, and 30, and Rx beams 1, 2, 3, and 4 at the UE side.

The UE reports the measurement results of Set B at time instance 1 and time instance 2 using the method shown in Table 5 for model inference at a base station side. The largest L1-RSRP is quantized using 7 bits, and the differential L1-RSRP is quantized using 4 bits, thus maintaining the current RSRP quantization rules. The reported content is shown in Table 11.

Table 11

| CSI report number | CSI fields | Reported bits | # of bits |
|---|---|---|---|
| CSI report #n | Indicator of the time instance corresponding to the largest reported L1-RSRP | 1 | 1 |
| | Indicator of the resource set corresponding to the largest reported L1-RSRP | 010 | 3 |
| | CRI of the resource corresponding to the largest reported L1-RSRP | 01 | 2 |
| | the largest L1-RSRP | 0101011 | 7 |
| | Differential RSRP of 1st CRI of the 1st resource set of 1st time instance | 0101 | 4 |
| | ... | ... | |
| | Differential RSRP of 4th CRI of the 8th resource set of 1st time instance | 0100 | 4 |
| | Differential RSRP of 1st CRI of the 1st resource set of 2nd time instance | 1010 | 4 |
| | ... | ... | |
| | Differential RSRP of 4th CRI of the 8th resource set of 2nd time instance | 1100 | 4 |

In Table 11, the UE reports the measurement results of Set B at time instance 1 and time instance 2. The beam corresponding to the largest L1-RSRP is Tx beam 10(010)-Rx beam 2(01) at time instance 2 (assuming bit 0 corresponds to time 1 and bit 1 corresponds to time 2). The largest L1-RSRP is quantized to 7 bits. Differential L1-RSRPs between 32 beam pairs at time instance 1 and the remaining 31 beam pairs at time instance 2 and the largest L1-RSRP are then reported in sequence.

Embodiment 5

In the embodiment, a base station predicts top-3 beam pairs among the 32 beam pairs of Set A based on RSRPs of 8 beam pairs of Set B. 8 DL Tx beams of Set B are composed of Tx beams 1, 5, 9, 13, 17, 21, 25, and 29, and Tx beams of Set A are all 32 Tx beams at the base station side. It is assumed that configuration method 2 is used, where the base station configures 8 CSI-RSs corresponding to Set B, with each CSI-RS configured with four repetitions. This allows the UE to determine the optimal Rx beam through beam sweeping.

Assume that the UE reports the measurement results for Set B for model inference at the base station side. The reported content is shown in Table 12.

Table 12

| CSI report number | CSI fields | Reported bits | # of bits |
|---|---|---|---|
| CSI report #n | CRI of the resource corresponding to the largest reported L1-RSRP | 101 | 3 |
| | the largest L1-RSRP | 1100110 | 7 |
| | Differential RSRP of 1st CRI | 0011 | 4 |
| | Differential RSRP of 2nd CRI | 1010 | 4 |
| | Differential RSRP of 3rd CRI | 0010 | 4 |
| | Differential RSRP of 4th CRI | 0111 | 4 |
| | Differential RSRP of 5th CRI | 0000 | 4 |
| | Differential RSRP of 7th CRI | 0001 | 4 |
| | Differential RSRP of 8th CRI | 1111 | 4 |

In Table 12, the optimal DL beam reported by the UE in measurements of the Set B is Tx beam 21 (101 corresponds to a sixth Tx beam in Set B). The L1-RSRP of this Tx beam is quantized to 7 bits. The difference between the L1-RSRP of the remaining 7 Tx beams in Set B and the largest L1-RSRP is also reported sequentially.

FIG. 2 is a second schematic flowchart of a method for information transmission according to an embodiment of the present application. As shown in FIG. 2, the method for information transmission according to an embodiment of the present application may be performed by a network device, such as a base station, a core network element, etc. The method includes:

step 201, transmitting a reporting configuration message to a terminal, where the reporting configuration message is used to indicate information to be reported; and

step 202, receiving the information to be reported indicated by the reporting configuration message transmitted from the terminal, where

receiving the information to be reported indicated by the reporting configuration message transmitted from the terminal includes:

in case that the reporting configuration message indicates reporting measurement results, receiving indexes associated with partial reference signal resources transmitted from the terminal, and sequentially receiving measurement results transmitted from the terminal; or

in case that the reporting configuration message indicates reporting top-K reference signal resources, receiving first indexes and/or second indexes associated with the K reference signal resources transmitted from the terminal, where K is a positive integer; or

in case that the reporting configuration message indicates reporting reference signal resource set patterns or combination, receiving an index of one or more reference signal resource set patterns or combinations transmitted from the terminal.

In some embodiments, the first indexes are indexes of reference signal resource sets, and the second indexes are indexes of reference signal resources; or
the first indexes are indexes of reference signal resources, and the second indexes are indexes of repetition numbers for reference signal resources.

In some embodiments, the method further includes:
performing associated operations on an artificial intelligence (AI) model based on information to be reported indicated by received reporting configuration message.

In some embodiments, the associated operations performed on the AI model include one or more of:

model training;

model inference;

model monitoring; or

model update.

In an embodiment, the method for information transmission provided by the embodiments of the present application may refer to the above-mentioned method for information transmission embodiment performed by the terminal, and may achieve the same effect. The corresponding method in this embodiment and the above-mentioned ones will no longer be described here. The same parts and beneficial effects of the method embodiments will be described in detail.

FIG. 3 is a schematic structural diagram of a terminal according to an embodiment of the present application. As shown in FIG. 3, the terminal includes a memory 320, a transceiver 300, and a processor 310.

The memory 320 is used for storing a computer program; the transceiver 300 is used for receiving and transmitting data under the control of the processor; the processor 310 is used for reading the computer program in the memory 320 and performing operations of:

obtaining a reporting configuration message transmitted from a network device; and

transmitting reported information indicated by the reporting configuration message to the network device;

transmitting the reported information indicated by the reporting configuration message to the network device includes:

in case that the reporting configuration message indicates reporting measurement results, transmitting indexes associated with partial reference signal resources to the network device, mapping measurement results in a mapping order, and transmitting mapped measurement results; or

in case that the reporting configuration message indicates reporting top-K reference signal resources, transmitting first indexes and/or second indexes associated with the K reference signal resources to the network device, where K is a positive integer; or

in case that the reporting configuration message indicates reporting reference signal resource set patterns or combination, transmitting an index of one or more reference signal resource set patterns or combinations to the network device.

In an embodiment, the transceiver 300 is used for receiving and transmitting data under control of the processor 310.

In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, which are well known in the art, and therefore will not be further described in the present application. The bus interface provides an interface. The transceiver 300 may be multiple elements, i.e., including a transmitter and a receiver, units for providing communication with various other devices over transmission media including wireless channels, wired channels, fiber optic cables, and the like. For different user equipment, a user interface 330 may be an interface capable of externally or internally connecting the required device, and the connected device includes, but not limited to, a keypad, a display, a speaker, a microphone, a joystick, and the like.

The processor 310 is responsible for managing the bus architecture and general processing, and the memory 320 may store data used by the processor 310 when performing operations.

The processor 310 may be a central processing unit (CPU), an application specific integrated circuit (ASIC), a field-programmable gate array (FPGA), or a complex programmable logic device (CPLD), the processor may also use a multi-core architecture.

The processor is configured to perform any one of the methods of the embodiments of the present application based on an obtained executable instruction by calling the computer program stored in the memory. The processor and memory may also be physically separated.

In some embodiments, transmitting the indexes associated with partial reference signal resources to the network device and mapping the measurement results in the mapping order includes:

measuring the reference signal resources to obtain multiple measurement results;

selecting a first reference measurement result from the multiple measurement results;

determining differences between remaining measurement results among the multiple measurement results other than the first reference measurement result and the first reference measurement result; and

transmitting, to the network device, the first reference measurement result, and a first index and a second index associated with a reference signal resource corresponding to the first reference measurement result, and mapping the differences in a mapping order.

In some embodiments, transmitting, to the network device, the first reference measurement result, and the first index and the second index associated with the reference signal resource corresponding to the first reference measurement result, and mapping the differences in the mapping order includes: transmitting, to the network device, the first reference measurement result, and the first index and the second index associated with the reference signal resource corresponding to the first reference measurement result, and mapping a difference corresponding to each reference signal resource in a first order of first indexes associated with reference signal resources corresponding to the differences and a second order of second indexes associated with the reference signal resource corresponding to the differences.

In some embodiments, transmitting the indexes associated with partial reference signal resources to the network device and mapping the measurement results in the mapping order includes:

measuring the reference signal resources to obtain multiple measurement results;

selecting a second reference measurement result from multiple measurement results corresponding to each reference signal resource set;

determining differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

In some embodiments, transmitting, to the network device, the second reference measurement result corresponding to each reference signal resource set and the second index associated with the reference signal resource corresponding to the second reference measurement result, and mapping the differences in a mapping order includes: transmitting, to the network device, the second reference measurement result corresponding to each reference signal resource set and the second index associated with the reference signal resource corresponding to the second reference measurement result, and mapping a difference corresponding to each reference signal resource in a first order of first indexes associated with reference signal resources corresponding to the differences and a second order of second indexes associated with the reference signal resources corresponding to the differences.

In some embodiments, transmitting the indexes associated with partial reference signal resources to the network device and mapping the measurement results in the mapping order includes:

measuring the reference signal resources to obtain multiple measurement results;

selecting a first reference measurement result from the multiple measurement results, and selecting second reference measurement results from multiple measurement results corresponding to second reference signal resource sets other than a first reference signal resource set corresponding to the first reference measurement result;

determining a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In some embodiments, transmitting, to the network device, the first reference measurement result, the first index and the second index associated with the reference signal resource corresponding to the first reference measurement result, and the second index associated with the reference signal resource corresponding to the first difference, and mapping the first difference, the second difference, and the third difference in a mapping order includes:
transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a first order of first indexes associated with reference signal resources corresponding to the first difference, the second difference, and the third difference, and a second order of second indexes associated with the reference signal resources corresponding to the first difference, the second difference and the third difference.
In some embodiments, transmitting the indexes associated with partial reference signal resources to the network device and mapping the measurement results in the mapping order includes:

measuring reference signal resources at different measurement time instances to obtain multiple measurement results;

selecting a first reference measurement result from the multiple measurement results;

determining differences between remaining measurement results among the multiple measurement results other than the first reference measurement result and the first reference measurement result; and

transmitting, to the network device, the first reference measurement result, a first index and a second index associated with a reference signal resource corresponding to the first reference measurement result, and an index of measurement time instances associated with the reference signal resource corresponding to the first reference measurement result, and mapping the differences in a mapping order.

In some embodiments, transmitting, to the network device, the first reference measurement result, the first index and the second index associated with the reference signal resource corresponding to the first reference measurement result, and the index of the measurement time instance associated with the reference signal resource corresponding to the first reference measurement result, and mapping the differences in the mapping order includes:
transmitting, to the network device, the first reference measurement result, the first index and the second index associated with the reference signal resource corresponding to the first reference measurement result, and the index of the measurement time instance associated with the reference signal resource corresponding to the first reference measurement result and mapping a difference corresponding to each reference signal resource in a third order of the indexes of the measurement time instances, a first order of first indexes associated with reference signal resources corresponding to the differences and a second order of second indexes associated with the reference signal resources corresponding to the differences.
In some embodiments, transmitting the indexes associated with partial reference signal resources to the network device and mapping the measurement results in the mapping order includes:

measuring reference signal resources at different measurement time instances to obtain multiple measurement results;

selecting a first reference measurement result from the multiple measurement results obtained at each measurement time instance;

determining, for each measurement time instance, differences between remaining measurement results among the multiple measurement results other than the first reference measurement result and the first reference measurement result; and

transmitting, to the network device, the first reference measurement result, and a first index and a second index associated with a reference signal resource corresponding to the first reference measurement result, and mapping the differences in a mapping order.

In some embodiments, transmitting, to the network device, the first reference measurement result, and the first index and the second index associated with the reference signal resource corresponding to the first reference measurement result, and mapping the differences in the mapping order includes: transmitting, to the network device, the first reference measurement result, and the first index and the second index associated with the reference signal resource corresponding to the first reference measurement result, and mapping a difference corresponding to each reference signal resource in a third order of indexes of measurement time instances, a first order of first indexes associated with reference signal resources corresponding to the differences and a second order of second indexes associated with the reference signal resources corresponding to the differences.

In some embodiments, transmitting the indexes associated with partial reference signal resources to the network device and mapping the measurement results in the mapping order includes:

measuring reference signal resources at different measurement time instances to obtain multiple measurement results;

selecting, for each measurement time instance, a second reference measurement result from multiple measurement results corresponding to each reference signal resource set;

determining, for each measurement time instance, differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

In some embodiments, transmitting, to the network device, the second reference measurement result corresponding to each reference signal resource set and the second index associated with the reference signal resource corresponding to the second reference measurement result, and mapping the differences in a mapping order includes: transmitting, to the network device, the second reference measurement result corresponding to each reference signal resource set and the second index associated with the reference signal resource corresponding to the second reference measurement result, and mapping a difference corresponding to each reference signal resource in a third order of indexes of the measurement time instances, a first order of first indexes associated with reference signal resources corresponding to the differences and a second order of second indexes associated with the reference signal resource corresponding to the differences.

In some embodiments, transmitting the indexes associated with partial reference signal resources to the network device and mapping the measurement results in the mapping order includes:

measuring the reference signal resources at different measurement time instances to obtain multiple measurement results;

selecting, for each measurement time instance, a first reference measurement result from the multiple measurement results, and selecting second reference measurement results from multiple measurement results corresponding to second reference signal resource sets other than a first reference signal resource set corresponding to the first reference measurement result;

determining, for each measurement time instance, a first difference between each of the second reference measurement results and the first reference measurement result, determining a second difference between

45

remaining measurement results corresponding to the first reference signal resource set other than the first reference measurement result and the first reference measurement result, and determining a third difference between remaining measurement results corresponding to each of the second reference signal resource sets other than the first difference and the first difference; and

transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In some embodiments, transmitting, to the network device, the first reference measurement result, the first index and the second index associated with the reference signal resource corresponding to the first reference measurement result, and the second index associated with the reference signal resource corresponding to the first difference, and mapping the first difference, the second difference, and the third difference in a mapping order includes:
transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

In some embodiments, transmitting the indexes associated with partial reference signal resources to the network device and mapping the measurement results in the mapping order includes:

measuring reference signal resources at different measurement time instances to obtain multiple measurement results;

selecting a first reference measurement result from the multiple measurement results; and selecting a second reference measurement result from second measurement time instances other than a first measurement time instance corresponding to the first reference measurement result;

determining a first difference between each of the second reference measurement results and the first reference measurement result, determining, for each measurement time instance, a second difference between remaining measurement results corresponding to the first reference signal resource set other than the first reference measurement result and the first reference measurement result or a third difference between remaining measurement results other than the first difference and the first difference; and

transmitting, to the network device, the first reference measurement result, a first index and a second index associated with a reference signal resource corresponding to the first reference measurement result, a first index and a second index associated with a reference signal resource corresponding to the first difference, and an index of a measurement time instance associated with a reference signal resource corresponding to the first reference measurement result and mapping the first difference, the second difference, and the third difference in a mapping order.

In some embodiments, transmitting, to the network device, the first reference measurement result, the first index and a second index associated with the reference signal resource corresponding to the first reference measurement result, the first index and the second index associated with a reference signal resource corresponding to the first difference, and the index of a measurement time instance associated with the reference signal resource corresponding to the first reference measurement result and mapping the first difference, the second difference, and the third difference in the mapping order includes:
transmitting, to the network device, the first reference measurement result and the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

It should be noted here that the above-mentioned UE according to the embodiments of the present application may implement all the method steps implemented by the above-mentioned method embodiments performed by the UE, and may achieve the same effect. The same parts and beneficial effects as the same method embodiments is not repeated in the present application.

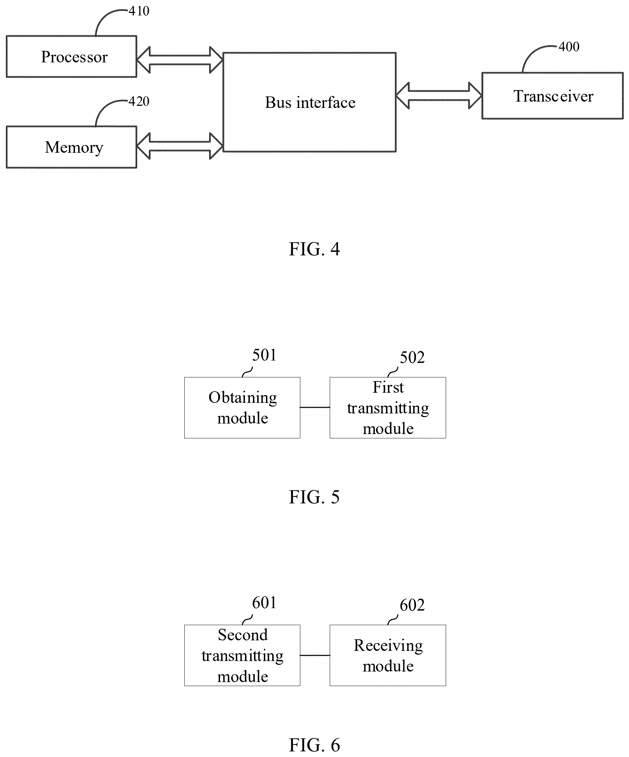

FIG. 4 is a schematic structural diagram of a network device according to an embodiment of the present application. As shown in FIG. 4, the network device includes a memory 420, a transceiver 400, and a processor 410.

The memory 420 is configured to store a computer program; the transceiver 400 is configured to send and receive data under the control of the processor; the processor 410 is configured to read the computer program in the memory 420 and perform operations of:

transmitting a reporting configuration message to a terminal, where the reporting configuration message is used to indicate information to be reported; and

receiving the information to be reported indicated by the reporting configuration message transmitted from the terminal;

receiving the information to be reported indicated by the reporting configuration message transmitted from the terminal includes:

in case that the reporting configuration message indicates reporting measurement results, receiving indexes associated with partial reference signal resources transmitted from the terminal, and sequentially receiving measurement results transmitted from the terminal; or

in case that the reporting configuration message indicates reporting top-K reference signal resources, receiving first indexes and/or second indexes associated with the K reference signal resources transmitted from the terminal, where K is a positive integer; or

in case that the reporting configuration message indicates reporting reference signal resource set patterns or combination, receiving an index of one or more reference signal resource set patterns or combinations transmitted from the terminal.

In an embodiment, the transceiver 400 is used for receiving and transmitting data under control of the processor 410.

In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, which are well known in the art, and therefore will not be further described in the present application. The bus interface provides an interface. The transceiver 400 may be multiple elements, i.e., including a transmitter and a receiver, units for providing communication with various other devices over transmission media including wireless channels, wired channels, fiber optic cables, and the like. The processor 410 is responsible for managing the bus architecture and general processing, and the memory 302 may store data used by the processor 410 when performing operations.

The processor 410 may be a central processing unit (CPU), an application specific integrated circuit (ASIC), a field-programmable gate array (FPGA), or a complex programmable logic device (CPLD), the processor may also use a multi-core architecture.

In some embodiments, the first indexes are indexes of a reference signal resource set, and the second indexes are indexes of reference signal resources; or

the first indexes are indexes of reference signal resources, and the second indexes are indexes of repetition numbers for reference signal resources.

In some embodiments, the processor is used for reading the computer program in the memory and performing operation of:

performing associated operations on an artificial intelligence (AI) model based on information to be reported indicated by received reporting configuration message.

In some embodiments, the associated operations performed on the AI model include one or more of:

model training;

model inference;

model monitoring; or

model update.

In an embodiment, the above-mentioned network device according to the embodiments of the present application may implement all the method steps implemented by the above-mentioned method embodiments performed by the network device, and may achieve the same effect. The same parts and beneficial effects as the same method embodiments is not repeated in the present application.

FIG. 5 is a first schematic structural diagram of an apparatus for information transmission according to an embodiment of the present application. As shown in FIG. 5, the apparatus for information transmission according to an embodiment of the present application, including an obtaining module 501 and a first transmitting module 502, where

an obtaining module 501 is used for obtaining a reporting configuration message transmitted from a network device; and

a first transmitting module 502 is used for transmitting information to be reported indicated by the reporting configuration message to the network device;

transmitting the information to be reported indicated by the reporting configuration message to the network device includes:

in case that the reporting configuration message indicates reporting measurement results, transmitting indexes associated with partial reference signal resources to the network device, mapping measurement results in a mapping order, and transmitting mapped measurement results; or

in case that the reporting configuration message indicates reporting top-K reference signal resources, transmitting first indexes and/or second indexes associated with the K reference signal resources to the network device, where K is a positive integer; or

in case that the reporting configuration message indicates reporting reference signal resource set patterns or combination, transmitting an index of one or more reference signal resource set patterns or combinations to the network device.

In some embodiments, the first transmitting module includes a first measuring unit, a first selecting unit, a first processing unit and a first transmitting unit, where

the first measuring unit is used for measuring the reference signal resources to obtain multiple measurement results;

the first selecting unit is used for selecting a first reference measurement result from the multiple measurement results;

the first processing unit is used for determining differences between remaining measurement results among the multiple measurement results other than the first reference measurement result and the first reference measurement result; and

the first transmitting unit is used for transmitting, to the network device, the first reference measurement result, and a first index and a second index associated with a reference signal resource corresponding to the first reference measurement result, and mapping the differences in a mapping order.

In some embodiment, the first transmitting unit is further used for:
transmitting, to the network device, the first reference measurement result, and the first index and the second index associated with the reference signal resource corresponding to the first reference measurement result, and mapping a difference corresponding to each reference signal resource in a first order of first indexes associated with reference signal resources corresponding to the differences and a second order of second indexes associated with the reference signal resource corresponding to the differences.

In some embodiments, the first transmitting module includes a second measuring unit, a second selecting unit, a second processing unit and a second transmitting unit, where

the second measuring unit is used for measuring the reference signal resources to obtain multiple measurement results;

the second selecting unit is used for selecting a second reference measurement result from multiple measurement results corresponding to each reference signal resource set;

the second processing unit is used for determining differences between remaining measurement results among the multiple measurement results corresponding to each reference signal resource set other than the second reference measurement result and the second reference measurement result; and

the second transmitting unit is used for transmitting, to the network device, the second reference measurement result corresponding to each reference signal resource set and a second index associated with a reference signal resource corresponding to the second reference measurement result, and mapping the differences in a mapping order.

In some embodiments, the second transmitting unit is further used for:
transmitting, to the network device, the second reference measurement result corresponding to each reference signal resource set and the second index associated with the reference signal resource corresponding to the second reference measurement result, and mapping a difference corresponding to each reference signal resource in a first order of first indexes associated with reference signal resources corresponding to the differences and a second order of second indexes associated with the reference signal resource corresponding to the differences.

In some embodiments, the first transmitting module includes a third measuring unit, a third selecting unit, a third processing unit and a third transmitting unit, where

the third measuring unit is used for measuring the reference signal resources to obtain multiple measurement results;

the third selecting unit is used for selecting a first reference measurement result from the multiple measurement results, and selecting second reference measurement results from multiple measurement results corresponding to second reference signal resource sets other than a first reference signal resource set corresponding to the first reference measurement result;

the third processing unit is used for determining a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

the third transmitting unit is used for transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In some embodiments, the third transmitting unit is further used for:
transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a first order of first indexes associated with reference signal resources corresponding to the first difference, the second difference, and the third difference, and a second order of second indexes associated with the reference signal resources corresponding to the first difference, the second difference and the third difference.

In some embodiments, the first transmitting module includes a fourth measuring unit, a fourth selecting unit, a fourth processing unit and a fourth transmitting unit, where

the fourth measuring unit is used for measuring the reference signal resources at different measurement time instances to obtain multiple measurement results;

the fourth selecting unit is used for selecting a first reference measurement result from the multiple measurement results;

the fourth processing unit is used for determining differences between remaining measurement results among the multiple measurement results other than the first reference measurement result and the first reference measurement result; and

the fourth transmitting unit is used for transmitting, to the network device, the first reference measurement result, a first index and a second index associated with a reference signal resource corresponding to the first reference measurement result, and indexes of measurement time instances associated with the reference signal resource corresponding to the first reference measurement result, and mapping the differences in a mapping order.

In some embodiments, the fourth processing unit is further used for:
transmitting, to the network device, the first reference measurement result, the first index and the second index associated with the reference signal resource corresponding to the first reference measurement result, and the indexes of the measurement time instances associated with the reference signal resource corresponding to the first reference measurement result and mapping a difference corresponding to each reference signal resource in a third order of the index of the measurement time instance, a first order of first indexes associated with reference signal resources corresponding to the differences and a second order of second indexes associated with the reference signal resource corresponding to the differences.

In some embodiments, the first transmitting module includes a fifth measuring unit, a fifth selecting unit, a fifth processing unit and a fifth transmitting unit, where

the fifth measuring unit is used for measuring the reference signal resources at different measurement time instances to obtain multiple measurement results;

the fifth selecting unit is used for selecting a first reference measurement result from the multiple measurement results obtained at each measurement time instance;

the fifth processing unit is used for determining, for each measurement time instance, differences between remaining measurement results among the multiple measurement results other than the first reference measurement result and the first reference measurement result; and

the fifth transmitting unit is used for transmitting, to the network device, the first reference measurement result, and a first index and a second index associated with a reference signal resource corresponding to the first reference measurement result, and mapping the differences in a mapping order.

In some embodiments, the fifth transmitting unit is further used for:
transmitting, to the network device, the first reference measurement result, and the first index and the second index associated with the reference signal resource corresponding to the first reference measurement result, and mapping a difference corresponding to each reference signal resource in a third order of indexes of measurement time instances, a first order of first indexes associated with reference signal resources corresponding to the differences and a second order of second indexes associated with the reference signal resource corresponding to the differences.

In some embodiments, the first transmitting module includes a sixth measuring unit, a sixth selecting unit, a sixth processing unit and a sixth transmitting unit, where

the sixth measuring unit is used for measuring reference signal resources at different measurement time instances to obtain multiple measurement results;

the sixth selecting unit is used for selecting, for each measurement time instance, a second reference measurement result from multiple measurement results corresponding to each reference signal resource set;

the sixth processing unit is used for determining, for each measurement time instance, differences between remaining measurement results among the multiple measurement results corresponding to each reference signal resource set other than the second reference measurement result and the second reference measurement result; and

the sixth transmitting unit is used for transmitting, to the network device, the second reference measurement result corresponding to each reference signal resource set and a second index associated with a reference signal resource corresponding to the second reference measurement result, and mapping the differences in a mapping order.

In some embodiments, the sixth transmitting unit is further used for:

transmitting, to the network device, the second reference measurement result corresponding to each reference signal resource set and the second index associated with the reference signal resource corresponding to the second reference measurement result, and mapping a difference corresponding to each reference signal resource in a third order of indexes of the measurement time instances, a first order of first indexes associated with reference signal resources corresponding to the differences and a second order of second indexes associated with the reference signal resource corresponding to the differences.

In some embodiments, the first transmitting module includes a seventh measuring unit, a seventh selecting unit, a seventh processing unit and a seventh transmitting unit, where

the seventh measuring unit is used for measuring the reference signal resources at different measurement time instances to obtain multiple measurement results;

the seventh selecting unit is used for selecting, for each measurement time instance, a first reference measurement result from the multiple measurement results, and selecting second reference measurement results from multiple measurement results corresponding to second reference signal resource sets other than a first reference signal resource set corresponding to the first reference measurement result;

the seventh processing unit is used for determining, for each measurement time instance, a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

the seventh transmitting unit is used for transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

In some embodiments, the seventh transmitting unit is further used for:
transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

In some embodiments, the first transmitting module includes an eighth measuring unit, an eighth selecting unit, an eighth processing unit and an eighth transmitting unit, where

the eighth measuring unit is used for measuring the reference signal resources at different measurement time instances to obtain multiple measurement results;

the eighth selecting unit is used for selecting a first reference measurement result from the multiple measurement results; and selecting a second reference measurement result from second measurement time instances other than a first measurement time instance corresponding to the first reference measurement result;

the eighth processing unit is used for determining a first difference between each of the second reference measurement results and the first reference measurement result, determining, for each measurement time instance, a second difference between remaining measurement results corresponding to the first reference signal resource set other than the first reference measurement result and the first reference measurement result or a third difference between remaining measurement results other than the first difference and the first difference; and

the eighth transmitting unit is used for transmitting, to the network device, the first reference measurement result, a first index and a second index associated with a reference signal resource corresponding to the first reference measurement result, a first index and a second index associated with a reference signal resource corresponding to the first difference, and an index of a measurement time instance associated with a reference signal resource corresponding to the first reference measurement result and mapping the first difference, the second difference, and the third difference in a mapping order.

In some embodiments, the eighth transmitting unit is further used for:

transmitting, to the network device, the first reference measurement result and the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

In some embodiments, the first reference measurement result or the second reference measurement result includes any of:

a largest value;

a smallest value;

a median value; or

an average value.

In some embodiments, the first order or the second order includes any of:

an ascending order;

a descending order;

an order configured by the network device; or

a given order.

In some embodiments, the first indexes are indexes of reference signal resource sets, and the second indexes are indexes of reference signal resources; or

the first indexes are indexes of reference signal resources, and the second indexes are indexes of repetition numbers for reference signal resources.

In some embodiments, the information to be reported indicated by the reporting configuration message is used to perform associated operations on the AI model.

In some embodiments, the associated operations performed on the AI model include one or more of:

model training;

model inference;

model monitoring; or

model update.

In an embodiment, the above-mentioned apparatus for information transmission according to the embodiments of the present application may implement all the method steps implemented by the above-mentioned method embodiments performed by the terminal, and may achieve the same effect. The same parts and beneficial effects as the same method embodiments is not repeated in the present application.

FIG. 6 is a second schematic structural diagram of an apparatus for information transmission according to an embodiment of the present application. As shown in FIG. 6, the apparatus for information transmission according to an embodiment of the present application, including a second transmitting module 601 and a receiving module 602, where

the second transmitting module 601 is used for transmitting a reporting configuration message to a terminal, where the reporting configuration message is used to indicate information to be reported; and

the receiving module 602 is used for receiving the information to be reported indicated by the reporting configuration message transmitted from the terminal;

receiving the information to be reported indicated by the reporting configuration message transmitted from the terminal includes:

in case that the reporting configuration message indicates reporting measurement results, receiving indexes associated with partial reference signal resources transmitted from the terminal, and sequentially receiving measurement results transmitted from the terminal; or

in case that the reporting configuration message indicates reporting top-K reference signal resources, receiving first indexes and/or second indexes associated with the K reference signal resources transmitted from the terminal, where K is a positive integer; or

in case that the reporting configuration message indicates reporting reference signal resource set patterns or combination, receiving an index of one or more reference signal resource set patterns or combinations transmitted from the terminal.

In some embodiments, the first indexes are indexes of a reference signal resource set, and the second indexes are indexes of reference signal resources; or
the first indexes are indexes of reference signal resources, and the second indexes are indexes of repetition numbers for reference signal resources.
In some embodiments, the apparatus further includes a processing module,
where the processing module is used for performing associated operations on an artificial intelligence (AI) model based on reported information indicated by received reporting configuration message.
In some embodiments, the associated operations performed on the AI model includes one or more of:

model training;

model inference;

model monitoring; or

model update.

In an embodiment, the above-mentioned apparatus for information transmission according to the embodiments of the present application may implement all the method steps implemented by the above-mentioned methods embodiments performed by the network device, and may achieve the same effect. The same parts and beneficial effects as the same method embodiments is not repeated in the present application.
It should be noted that, the division of units/modules in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit can be implemented in the form of hardware or software functional unit.
If the integrated unit is implemented in the form of a software functional unit and sold or used as an independent product, it can be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.
An embodiment of the present application further provides a computer-readable storage medium storing a computer program, where the is used to cause a computer to perform the method for information transmission described above.
Specifically, the above-mentioned computer-readable storage medium according to the embodiments of the present application can implement all the method steps implemented by the above-mentioned method embodiments, and may achieve the same effect. The same parts and beneficial effects as the same method embodiments will not be repeated here.

It should be noted that the computer-readable storage medium may be any available medium or data storage device that can be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

In should be noted that terms "first," "second," etc. are used to distinguish similar objects and are not used to describe a particular order or sequence. It is to be understood that the terms so used are interchangeable under appropriate circumstances so that embodiments of the present application can be practiced in sequences other than those illustrated or described herein, and that "first" and "second" are distinguished objects It is usually one type, and the number of objects is not limited. For example, the first object can be one or multiple.

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

"Determining B based on A" in the present application means that the factor A should be considered when B is determined. It is not limited to "determining B based on A alone", but also includes: "determining B based on A and C", "determining B based on A, C and E", "determining C based on A, and further determining B based on C", etc. In addition, it may also include using A as a condition for determining B, for example, "when A satisfies a first condition, determining B using the first method", for another example, "when A satisfies a second condition, determining B", etc.; for still another example, "when A satisfies a third condition, determining B based on the first parameter" and so on. It may also be that A is used as a condition for determining B factor, for example, "when A satisfies the first condition, determining C using the first method, and further determining B based on C" and so on.

In the embodiments of the present application, the term "multiple" refers to two or more than two, and other quantifiers are similar.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G New Radio (NR) system, etc. These various systems include a terminal device and a network device. The system may also include a core network part, such as an evolved packet system (EPS), a 5G system (5GS), and the like.

The terminal device involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. Network device can be used to exchange received air frames with Internet Protocol (IP) packets, and act as a router between wireless terminal and the rest of the access network, and the rest of the access network can include an IP communication network. The network devices may also coordinate attribute management for the air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a Home evolved Node B (HeNB), a relay node, a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission.

As appreciated by those skilled in the art, embodiments of the present disclosure may be provided as a method, a system, or a computer program product. Accordingly, the present application may take the form of an entirely hardware embodiment, an entirely software embodiment, or an embodiment combining software and hardware aspects. Furthermore, the present application may take the form of a computer program product embodied on one or more computer-usable storage media having computer-usable program code embodied therein, including but not limited to disk storage, optical storage, and the like.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

**Claims**

1. A method for information transmission, performed by a terminal, comprising:

   obtaining a reporting configuration message transmitted from a network device; and
   transmitting information to be reported indicated by the reporting configuration message to the network device;
   transmitting the information to be reported indicated by the reporting configuration message to the network device comprises:

   transmitting indexes associated with partial reference signal resources to the network device, mapping measurement results in a mapping order, and transmitting mapped measurement results; or
   transmitting first indexes and/or second indexes associated with the K reference signal resources to the network device, wherein K is a positive integer; or
   transmitting an index of one or more reference signal resource set patterns or combinations to the network device.

2. The method of claim 1, wherein transmitting the indexes associated with partial reference signal resources to the network device and mapping the measurement results in the mapping order comprises:

measuring the reference signal resources to obtain multiple measurement results;

selecting a first reference measurement result from the multiple measurement results;

determining differences between remaining measurement results among the multiple measurement results other than the first reference measurement result and the first reference measurement result; and

transmitting, to the network device, the first reference measurement result, and a first index and a second index associated with a reference signal resource corresponding to the first reference measurement result, and mapping the differences in a mapping order.

3. The method of claim 2, wherein transmitting, to the network device, the first reference measurement result, and the first index and the second index associated with the reference signal resource corresponding to the first reference measurement result, and mapping the differences in the mapping order comprises:

transmitting, to the network device, the first reference measurement result, and the first index and the second index associated with the reference signal resource corresponding to the first reference measurement result, and mapping a difference corresponding to each reference signal resource in a first order of first indexes associated with reference signal resources corresponding to the differences and a second order of second indexes associated with the reference signal resource corresponding to the differences.

4. The method of claim 1, wherein transmitting the indexes associated with partial reference signal resources to the network device and mapping the measurement results in the mapping order comprises:

measuring the reference signal resources to obtain multiple measurement results;

selecting a second reference measurement result from multiple measurement results corresponding to each reference signal resource set;

determining differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

5. The method of claim 4, wherein transmitting, to the network device, the second reference measurement result corresponding to each reference signal resource set and the second index associated with the reference signal resource corresponding to the second reference measurement result, and mapping the differences in the mapping order comprises:

transmitting, to the network device, the second reference measurement result corresponding to each reference signal resource set and the second index associated with the reference signal resource corresponding to the second reference measurement result, and mapping a difference corresponding to each reference signal resource in a first order of first indexes associated with reference signal resources corresponding to the differences and a second order of second indexes associated with the reference signal resources corresponding to the differences.

6. The method of claim 1, wherein transmitting the indexes associated with partial reference signal resources to the network device and mapping the measurement results in the mapping order comprises:

measuring the reference signal resources to obtain multiple measurement results;

selecting a first reference measurement result from the multiple measurement results, and selecting second reference measurement results from multiple measurement results corresponding to second reference signal resource sets other than a first reference signal resource set corresponding to the first reference measurement result;

determining a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

7. The method of claim 6, wherein transmitting, to the network device, the first reference measurement result, the first index and the second index associated with the reference signal resource corresponding to the first reference measurement result, and the second index associated with the reference signal resource corresponding to the first difference, and mapping the first difference, the second difference, and the third difference in the mapping order comprises:

transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a first order of first indexes associated with reference signal resources corresponding to the first difference, the second difference, and the third difference, and a second order of second indexes associated with the reference signal resources corresponding to the first difference, the second difference and the third difference.

8. The method of claim 1, wherein transmitting the indexes associated with partial reference signal resources to the network device and mapping the measurement results in the mapping order comprises:

measuring reference signal resources at different measurement time instances to obtain multiple measurement results;
selecting a first reference measurement result from the multiple measurement results;
determining differences between remaining measurement results among the multiple measurement results other than the first reference measurement result and the first reference measurement result; and
transmitting, to the network device, the first reference measurement result, a first index and a second index associated with a reference signal resource corresponding to the first reference measurement result, and an index of measurement time instance associated with the reference signal resource corresponding to the first reference measurement result, and mapping the differences in a mapping order.

9. The method of claim 8, wherein transmitting, to the network device, the first reference measurement result, the first index and the second index associated with the reference signal resource corresponding to the first reference measurement result, and the index of measurement time instance associated with the reference signal resource corresponding to the first reference measurement result, and mapping the differences in the mapping order comprises:

transmitting, to the network device, the first reference measurement result, the first index and the second index associated with the reference signal resource corresponding to the first reference measurement result, and the index of the measurement time instance associated with the reference signal resource corresponding to the first reference measurement result and mapping a difference corresponding to each reference signal resource in a third order of the indexes of the measurement time instances, a first order of first indexes associated with reference signal resources corresponding to the differences and a second order of second indexes associated with the reference signal resources corresponding to the differences.

10. The method of claim 1, wherein transmitting the indexes associated with partial reference signal resources to the network device and mapping the measurement results in the mapping order comprises:

measuring reference signal resources at different measurement time instances to obtain multiple measurement results;
selecting a first reference measurement result from the multiple measurement results obtained at each measurement time instance;
determining, for each measurement time instance, differences between remaining measurement results among the multiple measurement results other than the first reference measurement result and the first reference measurement result; and
transmitting, to the network device, the first reference measurement result, and a first index and a second index associated with a reference signal resource corresponding to the first reference measurement result, and mapping the differences in a mapping order.

11. The method of claim 10, wherein transmitting, to the network device, the first reference measurement result, and the first index and the second index associated with the reference signal resource corresponding to the first reference measurement result, and mapping the differences in the mapping order comprises:
transmitting, to the network device, the first reference measurement result, and the first index and the second index associated with the reference signal resource corresponding to the first reference measurement result, and mapping a difference corresponding to each reference signal resource in a third order of indexes of measurement time instances, a first order of first indexes associated with reference signal resources corresponding to the differences and a second order of second indexes associated with the reference signal resources corresponding to the differences.

12. The method of claim 1, wherein transmitting the indexes associated with partial reference signal resources to the network device and mapping the measurement results in the mapping order comprises:

measuring reference signal resources at different measurement time instances to obtain multiple measurement results;

selecting, for each measurement time instance, a second reference measurement result from multiple measurement results corresponding to each reference signal resource set;

determining, for each measurement time instance, differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

13. The method of claim 12, wherein transmitting, to the network device, the second reference measurement result corresponding to each reference signal resource set and the second index associated with the reference signal resource corresponding to the second reference measurement result, and mapping the differences in the mapping order comprises:

transmitting, to the network device, the second reference measurement result corresponding to each reference signal resource set and the second index associated with the reference signal resource corresponding to the second reference measurement result, and mapping a difference corresponding to each reference signal resource in a third order of indexes of the measurement time instances, a first order of first indexes associated with reference signal resources corresponding to the differences and a second order of second indexes associated with the reference signal resource corresponding to the differences.

14. The method of claim 1, wherein transmitting the indexes associated with partial reference signal resources to the network device and mapping the measurement results in the mapping order comprises:

measuring reference signal resources at different measurement time instances to obtain multiple measurement results;

selecting, for each measurement time instance, a first reference measurement result from the multiple measurement results, and selecting second reference measurement results from multiple measurement results corresponding to second reference signal resource sets other than a first reference signal resource set corresponding to the first reference measurement result;

determining, for each measurement time instance, a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

15. The method of claim 14, wherein transmitting, to the network device, the first reference measurement result, the first index and the second index associated with the reference signal resource corresponding to the first reference measurement result, and the second index associated with the reference signal resource corresponding to the first difference, and mapping the first difference, the second difference, and the third difference in the mapping order comprises:

transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

16. The method of claim 1, wherein transmitting the indexes associated with partial reference signal resources to the network device and mapping the measurement results in the mapping order comprises:

measuring reference signal resources at different measurement time instances to obtain multiple measurement results;
selecting a first reference measurement result from the multiple measurement results; and selecting a second reference measurement result from second measurement time instances other than a first measurement time instance corresponding to the first reference measurement result;
determining a first difference between each of the second reference measurement results and the first reference measurement result, determining, for each measurement time instance, a second difference between remaining measurement results other than the first reference measurement result and the first reference measurement result or a third difference between remaining measurement results other than the first difference and the first difference; and
transmitting, to the network device, the first reference measurement result, a first index and a second index associated with a reference signal resource corresponding to the first reference measurement result, a first index and a second index associated with a reference signal resource corresponding to the first difference, and an index of a measurement time instance associated with a reference signal resource corresponding to the first reference measurement result and mapping the first difference, the second difference, and the third difference in a mapping order.

17. The method of claim 16, wherein transmitting, to the network device, the first reference measurement result, the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference in the mapping order comprises:
transmitting, to the network device, the first reference measurement result and the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

18. The method of claim 2 or 4 or 6 or 8 or 10 or 12 or 14 or 16, wherein the first reference measurement result or the second reference measurement result comprises at least one of:

a largest value;
a smallest value;
a median value; or
an average value.

19. The method of claim 3 or 5 or 7 or 9 or 11 or 13 or 15 or 17, wherein the first order or the second order comprises at least one of:

an ascending order;
a descending order;
an order configured by the network device; or
a given order.

20. The method of any of claims 1 to 17, wherein the first indexes are indexes of reference signal resource sets, and the second indexes are indexes of reference signal resources; or
the first indexes are indexes of reference signal resources, and the second indexes are indexes of repetition numbers for reference signal resources.

21. The method of any of claims 1 to 17, wherein the information to be reported indicated by the reporting configuration message is used to perform associated operations on an artificial intelligence model.

22. The method of claim 21, wherein the associated operations on the artificial intelligence model comprise one or more of:

   model training;
   model inference;
   model monitoring; or
   model update.

23. A method for information transmission, performed by a network device, comprising:

   transmitting a reporting configuration message to a terminal, wherein the reporting configuration message is used to indicate information to be reported; and
   receiving the information to be reported indicated by the reporting configuration message transmitted from the terminal;
   receiving the information to be reported indicated by the reporting configuration message transmitted from the terminal comprises:

      receiving indexes associated with partial reference signal resources transmitted from the terminal, and sequentially receiving measurement results transmitted from the terminal; or
      receiving first indexes and/or second indexes associated with the K reference signal resources transmitted from the terminal, wherein K is a positive integer; or
      receiving an index of one or more reference signal resource set patterns or combinations transmitted from the terminal.

24. The method of claim 23, wherein the first indexes are indexes of reference signal resource sets, and the second indexes are indexes of reference signal resources; or
the first indexes are indexes of reference signal resources, and the second indexes are indexes of repetition numbers for reference signal resources.

25. The method of claim 23, further comprising:
performing associated operations on an artificial intelligence model based on information to be reported indicated by received reporting configuration message.

26. The method of claim 25, wherein the associated operations on the artificial intelligence model comprise one or more of:

   model training;
   model inference;
   model monitoring; or
   model update.

27. A terminal, comprising a memory, a transceiver and a processor,
wherein the memory is used for storing a computer program, the transceiver is used for receiving and transmitting data under control of the processor and the processor is used for reading the computer program in the memory and performing operations of:

   obtaining a reporting configuration message transmitted from a network device; and
   transmitting information to be reported indicated by the reporting configuration message to the network device;
   transmitting the information to be reported indicated by the reporting configuration message to the network device comprises:

transmitting indexes associated with partial reference signal resources to the network device, mapping measurement results in a mapping order, and transmitting mapped measurement results; or

transmitting first indexes and/or second indexes associated with the K reference signal resources to the network device, wherein K is a positive integer; or

transmitting an index of one or more reference signal resource set patterns or combinations to the network device.

28. The terminal of claim 27, wherein transmitting the indexes associated with partial reference signal resources to the network device and mapping the measurement results in the mapping order comprises:

measuring the reference signal resources to obtain multiple measurement results;

selecting a first reference measurement result from the multiple measurement results;

determining differences between remaining measurement results among the multiple measurement results other than the first reference measurement result and the first reference measurement result; and

transmitting, to the network device, the first reference measurement result, and a first index and a second index associated with a reference signal resource corresponding to the first reference measurement result, and mapping the differences in a mapping order.

29. The terminal of claim 28, wherein transmitting, to the network device, the first reference measurement result, and the first index and the second index associated with the reference signal resource corresponding to the first reference measurement result, and mapping the differences in the mapping order comprises:

transmitting, to the network device, the first reference measurement result, and the first index and the second index associated with the reference signal resource corresponding to the first reference measurement result, and mapping a difference corresponding to each reference signal resource in a first order of first indexes associated with reference signal resources corresponding to the differences and a second order of second indexes associated with the reference signal resource corresponding to the differences.

30. The terminal of claim 27, wherein transmitting the indexes associated with partial reference signal resources to the network device and mapping the measurement results in the mapping order comprises:

measuring the reference signal resources to obtain multiple measurement results;

selecting a second reference measurement result from multiple measurement results corresponding to each reference signal resource set;

determining differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

31. The terminal of claim 30, wherein transmitting, to the network device, the second reference measurement result corresponding to each reference signal resource set and the second index associated with the reference signal resource corresponding to the second reference measurement result, and mapping the differences in the mapping order comprises:

transmitting, to the network device, the second reference measurement result corresponding to each reference signal resource set and the second index associated with the reference signal resource corresponding to the second reference measurement result, and mapping a difference corresponding to each reference signal resource in a first order of first indexes associated with reference signal resources corresponding to the differences and a second order of second indexes associated with the reference signal resources corresponding to the differences.

32. The terminal of claim 27, wherein transmitting the indexes associated with partial reference signal resources to the network device and mapping the measurement results in the mapping order comprises:

measuring the reference signal resources to obtain multiple measurement results;

selecting a first reference measurement result from the multiple measurement results, and selecting second reference measurement results from multiple measurement results corresponding to second reference signal resource sets other than a first reference signal resource set corresponding to the first reference measurement result;

determining a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

33. The terminal of claim 32, wherein transmitting, to the network device, the first reference measurement result, the first index and the second index associated with the reference signal resource corresponding to the first reference measurement result, and the second index associated with the reference signal resource corresponding to the first difference, and mapping the first difference, the second difference, and the third difference in the mapping order comprises:
transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a first order of first indexes associated with reference signal resources corresponding to the first difference, the second difference, and the third difference, and a second order of second indexes associated with the reference signal resources corresponding to the first difference, the second difference and the third difference.

34. The terminal of claim 27, wherein transmitting the indexes associated with partial reference signal resources to the network device and mapping the measurement results in the mapping order comprises:

measuring reference signal resources at different measurement time instances to obtain multiple measurement results;
selecting a first reference measurement result from the multiple measurement results;
determining differences between remaining measurement results among the multiple measurement results other than the first reference measurement result and the first reference measurement result; and
transmitting, to the network device, the first reference measurement result, a first index and a second index associated with a reference signal resource corresponding to the first reference measurement result, and an index of measurement time instances associated with the reference signal resource corresponding to the first reference measurement result, and mapping the differences in a mapping order.

35. The terminal of claim 34, wherein transmitting, to the network device, the first reference measurement result, the first index and the second index associated with the reference signal resource corresponding to the first reference measurement result, and the index of measurement time instance associated with the reference signal resource corresponding to the first reference measurement result, and mapping the differences in the mapping order comprises:
transmitting, to the network device, the first reference measurement result, the first index and the second index associated with the reference signal resource corresponding to the first reference measurement result, and the index of the measurement time instance associated with the reference signal resource corresponding to the first reference measurement result and mapping a difference corresponding to each reference signal resource in a third order of the indexes of the measurement time instances, a first order of first indexes associated with reference signal resources corresponding to the differences and a second order of second indexes associated with the reference signal resources corresponding to the differences.

36. The terminal of claim 27, wherein transmitting the indexes associated with partial reference signal resources to the network device and mapping the measurement results in the mapping order comprises:

measuring reference signal resources at different measurement time instances to obtain multiple measurement results;
selecting a first reference measurement result from the multiple measurement results obtained at each measurement time instance;
determining, for each measurement time instance, differences between remaining measurement results among the multiple measurement results other than the first reference measurement result and the first reference measurement result; and

transmitting, to the network device, the first reference measurement result, and a first index and a second index associated with a reference signal resource corresponding to the first reference measurement result, and mapping the differences in a mapping order.

37. The terminal of claim 36, wherein transmitting, to the network device, the first reference measurement result, and the first index and the second index associated with the reference signal resource corresponding to the first reference measurement result, and mapping the differences in the mapping order comprises:

transmitting, to the network device, the first reference measurement result, and the first index and the second index associated with the reference signal resource corresponding to the first reference measurement result, and mapping a difference corresponding to each reference signal resource in a third order of indexes of measurement time instances, a first order of first indexes associated with reference signal resources corresponding to the differences and a second order of second indexes associated with the reference signal resources corresponding to the differences.

38. The terminal of claim 27, wherein transmitting the indexes associated with partial reference signal resources to the network device and mapping the measurement results in the mapping order comprises:

measuring reference signal resources at different measurement time instances to obtain multiple measurement results;

selecting, for each measurement time instance, a second reference measurement result from multiple measurement results corresponding to each reference signal resource set;

determining, for each measurement time instance, differences between remaining measurement results among the multiple measurement results corresponding to each reference signal resource set other than the second reference measurement result and the second reference measurement result; and

transmitting, to the network device, the second reference measurement result corresponding to each reference signal resource set and a second index associated with a reference signal resource corresponding to the second reference measurement result, and mapping the differences in a mapping order.

39. The terminal of claim 38, wherein transmitting, to the network device, the second reference measurement result corresponding to each reference signal resource set and the second index associated with the reference signal resource corresponding to the second reference measurement result, and mapping the differences in the mapping order comprises:

transmitting, to the network device, the second reference measurement result corresponding to each reference signal resource set and the second index associated with the reference signal resource corresponding to the second reference measurement result, and mapping a difference corresponding to each reference signal resource in a third order of indexes of the measurement time instances, a first order of first indexes associated with reference signal resources corresponding to the differences and a second order of second indexes associated with the reference signal resource corresponding to the differences.

40. The terminal of claim 27, wherein transmitting the indexes associated with partial reference signal resources to the network device and mapping the measurement results in the mapping order comprises:

measuring reference signal resources at different measurement time instances to obtain multiple measurement results;

selecting, for each measurement time instance, a first reference measurement result from the multiple measurement results, and selecting second reference measurement results from multiple measurement results corresponding to second reference signal resource sets other than a first reference signal resource set corresponding to the first reference measurement result;

determining, for each measurement time instance, a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and

transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

41. The terminal of claim 40, wherein transmitting, to the network device, the first reference measurement result, the first index and the second index associated with a reference signal resource corresponding to the first reference measurement result, and the second index associated with the reference signal resource corresponding to the first difference, and mapping the first difference, the second difference, and the third difference in the mapping order comprises:
transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

42. The terminal of claim 27, wherein transmitting the indexes associated with partial reference signal resources to the network device and mapping the measurement results in the mapping order comprises:

measuring reference signal resources at different measurement time instances to obtain multiple measurement results;
selecting a first reference measurement result from the multiple measurement results; and selecting a second reference measurement result from second measurement time instances other than a first measurement time instance corresponding to the first reference measurement result;
determining a first difference between each of the second reference measurement results and the first reference measurement result, determining, for each measurement time instance, a second difference between remaining measurement results corresponding to the first reference signal resource set other than the first reference measurement result and the first reference measurement result or a third difference between remaining measurement results other than the first difference and the first difference; and
transmitting, to the network device, the first reference measurement result, a first index and a second index associated with a reference signal resource corresponding to the first reference measurement result, a first index and a second index associated with a reference signal resource corresponding to the first difference, and an index of a measurement time instance associated with a reference signal resource corresponding to the first reference measurement result and mapping the first difference, the second difference, and the third difference in a mapping order.

43. The terminal of claim 42, wherein transmitting, to the network device, the first reference measurement result, the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference in the mapping order comprises:
transmitting, to the network device, the first reference measurement result and the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

44. A network device, comprising a memory, a transceiver and a processor,
wherein the memory is used for storing a computer program; the transceiver is used for receiving and sending data under control of the processor; the processor is used for reading the computer program in the memory and performing operations of:

transmitting a reporting configuration message to a terminal, wherein the reporting configuration message is used to indicate information to be reported; and
receiving the information to be reported indicated by the reporting configuration message transmitted from the terminal;
receiving the information to be reported indicated by the reporting configuration message transmitted from the terminal comprises:

receiving indexes associated with partial reference signal resources transmitted from the terminal, and sequentially receiving measurement results transmitted from the terminal; or
receiving first indexes and/or second indexes associated with the K reference signal resources transmitted from the terminal, wherein K is a positive integer; or
receiving an index of one or more reference signal resource set patterns or combinations transmitted from the terminal.

45. The network device of claim 44, wherein the first indexes are indexes of reference signal resource sets, and the second indexes are indexes of reference signal resources; or
the first indexes are indexes of reference signal resources, and the second indexes are indexes of repetition numbers for reference signal resources.

46. The network device of claim 44, wherein the processor is used for further reading the computer program in the memory and performing operations of:
performing associated operations on an artificial intelligence model based on information to be reported indicated by received reporting configuration message.

47. The network device of claim 46, wherein the associated operations on the artificial intelligence model comprise one or more of:

model training;
model inference;
model monitoring; or
model update.

48. An apparatus for information transmission, comprising:

an obtaining module, used for obtaining a reporting configuration message transmitted from a network device; and
a first transmitting module, used for transmitting information to be reported indicated by the reporting configuration message to the network device;
transmitting the information to be reported indicated by the reporting configuration message to the network device comprises:

transmitting indexes associated with partial reference signal resources to the network device, mapping measurement results in a mapping order, and transmitting mapped measurement results; or
transmitting first indexes and/or second indexes associated with the K reference signal resources to the network device, wherein K is a positive integer; or
transmitting an index of one or more reference signal resource set patterns or combinations to the network device.

49. The apparatus of claim 48, wherein the first transmitting module comprises a first measuring unit, a first selecting unit, a first processing unit and a first transmitting unit, wherein

the first measuring unit is used for measuring the reference signal resources to obtain multiple measurement results;
the first selecting unit is used for selecting a first reference measurement result from the multiple measurement results;
the first processing unit is used for determining differences between remaining measurement results among the multiple measurement results other than the first reference measurement result and the first reference measurement result; and
the first transmitting unit is used for transmitting, to the network device, the first reference measurement result, and a first index and a second index associated with a reference signal resource corresponding to the first reference measurement result, and mapping the differences in a mapping order.

50. The apparatus of claim 49, wherein the first transmitting unit is used for:
transmitting, to the network device, the first reference measurement result, and the first index and the second index associated with the reference signal resource corresponding to the first reference measurement result, and mapping a difference corresponding to each reference signal resource in a first order of first indexes associated with reference signal resources corresponding to the differences and a second order of second indexes associated with the reference signal resource corresponding to the differences.

51. The apparatus of claim 48, wherein the first transmitting module comprises a second measuring unit, a second selecting unit, a second processing unit and a second transmitting unit, wherein

the second measuring unit is used for measuring the reference signal resources to obtain multiple measurement results;
the second selecting unit is used for selecting a second reference measurement result from multiple measurement results corresponding to each reference signal resource set;
the second processing unit is used for determining differences between remaining measurement results among the multiple measurement results corresponding to each reference signal resource set other than the second reference measurement result and the second reference measurement result; and
the second transmitting unit is used for transmitting, to the network device, the second reference measurement result corresponding to each reference signal resource set and a second index associated with a reference signal resource corresponding to the second reference measurement result, and mapping the differences in a mapping order.

52. The apparatus of claim 51, wherein the second transmitting unit is used for:
transmitting, to the network device, the second reference measurement result corresponding to each reference signal resource set and the second index associated with the reference signal resource corresponding to the second reference measurement result, and mapping a difference corresponding to each reference signal resource in a first order of first indexes associated with reference signal resources corresponding to the differences and a second order of second indexes associated with the reference signal resources corresponding to the differences.

53. The apparatus of claim 48, wherein the first transmitting module comprises a third measuring unit, a third selecting unit, a third processing unit and a third transmitting unit, wherein

the third measuring unit is used for measuring the reference signal resources to obtain multiple measurement results;
the third selecting unit is used for selecting a first reference measurement result from the multiple measurement results, and selecting second reference measurement results from multiple measurement results corresponding to second reference signal resource sets other than a first reference signal resource set corresponding to the first reference measurement result;
the third processing unit is used for determining a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and
the third transmitting unit is used for transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

54. The apparatus of claim 53, wherein the third transmitting unit is used for:
transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a first order of first indexes associated with reference signal resources corresponding to the first difference, the second difference, and the third difference, and a second order of second indexes associated with the reference signal resources corresponding to the first difference, the second difference and the third difference.

55. The apparatus of claim 48, wherein the first transmitting module comprises a fourth measuring unit, a fourth selecting unit, a fourth processing unit and a fourth transmitting unit, wherein

the fourth measuring unit is used for measuring reference signal resources at different measurement time instances to obtain multiple measurement results;

the fourth selecting unit is used for selecting a first reference measurement result from the multiple measurement results;

the fourth processing unit is used for determining differences between remaining measurement results among the multiple measurement results other than the first reference measurement result and the first reference measurement result; and

the fourth transmitting unit is used for transmitting, to the network device, the first reference measurement result, a first index and a second index associated with a reference signal resource corresponding to the first reference measurement result, and an index of measurement time instances associated with the reference signal resource corresponding to the first reference measurement result, and mapping the differences in a mapping order.

56. The apparatus of claim 55, wherein the fourth processing unit is used for:
transmitting, to the network device, the first reference measurement result, the first index and the second index associated with the reference signal resource corresponding to the first reference measurement result, and the index of the measurement time instance associated with the reference signal resource corresponding to the first reference measurement result and mapping a difference corresponding to each reference signal resource in a third order of the indexes of the measurement time instances, a first order of first indexes associated with reference signal resources corresponding to the differences and a second order of second indexes associated with the reference signal resources corresponding to the differences.

57. The apparatus of claim 48, wherein the first transmitting module comprises a fifth measuring unit, a fifth selecting unit, a fifth processing unit and a fifth transmitting unit, wherein

the fifth measuring unit is used for measuring reference signal resources at different measurement time instances to obtain multiple measurement results;

the fifth selecting unit is used for selecting a first reference measurement result from the multiple measurement results obtained at each measurement time instance;

the fifth processing unit is used for determining, for each measurement time instance, differences between remaining measurement results among the multiple measurement results other than the first reference measurement result and the first reference measurement result; and

the fifth transmitting unit is used for transmitting, to the network device, the first reference measurement result, and a first index and a second index associated with a reference signal resource corresponding to the first reference measurement result, and mapping the differences in a mapping order.

58. The apparatus of claim 57, wherein the fifth transmitting unit is used for:
transmitting, to the network device, the first reference measurement result, and the first index and the second index associated with the reference signal resource corresponding to the first reference measurement result, and mapping a difference corresponding to each reference signal resource in a third order of indexes of measurement time instances, a first order of first indexes associated with reference signal resources corresponding to the differences and a second order of second indexes associated with the reference signal resources corresponding to the differences.

59. The apparatus of claim 48, wherein the first transmitting module comprises a sixth measuring unit, a sixth selecting unit, a sixth processing unit and a sixth transmitting unit, wherein

the sixth measuring unit is used for measuring reference signal resources at different measurement time instances to obtain multiple measurement results;

the sixth selecting unit is used for selecting, for each measurement time instance, a second reference measurement result from multiple measurement results corresponding to each reference signal resource set;

the sixth processing unit is used for determining, for each measurement time instance, differences between remaining measurement results among the multiple measurement results corresponding to each reference signal resource set other than the second reference measurement result and the second reference measurement result; and

the sixth transmitting unit is used for transmitting, to the network device, the second reference measurement result corresponding to each reference signal resource set and a second index associated with a reference signal resource corresponding to the second reference measurement result, and mapping the differences in a mapping order.

60. The apparatus of claim 59, wherein the sixth transmitting unit is used for:

transmitting, to the network device, the second reference measurement result corresponding to each reference signal resource set and the second index associated with the reference signal resource corresponding to the second reference measurement result, and mapping a difference corresponding to each reference signal resource in a third order of indexes of the measurement time instances, a first order of first indexes associated with reference signal resources corresponding to the differences and a second order of second indexes associated with the reference signal resource corresponding to the differences.

61. The apparatus of claim 48, wherein the first transmitting module comprises a seventh measuring unit, a seventh selecting unit, a seventh processing unit and a seventh transmitting unit, wherein

the seventh measuring unit is used for measuring reference signal resources at different measurement time instances to obtain multiple measurement results;
the seventh selecting unit is used for selecting, for each measurement time instance, a first reference measurement result from the multiple measurement results, and selecting second reference measurement results from multiple measurement results corresponding to second reference signal resource sets other than a first reference signal resource set corresponding to the first reference measurement result;
the seventh processing unit is used for determining, for each measurement time instance, a first difference between each of the second reference measurement results and the first reference measurement result, determining a second difference between remaining measurement results corresponding to the first reference signal resource set other than the first reference measurement result and the first reference measurement result, and determining a third difference between remaining measurement results corresponding to each of the second reference signal resource sets other than the first difference and the first difference; and
the seventh transmitting unit is used for transmitting, to the network device, the first reference measurement result, a first index and a second index associated with a reference signal resource corresponding to the first reference measurement result, and a second index associated with a reference signal resource corresponding to the first difference, and mapping the first difference, the second difference, and the third difference in a mapping order.

62. The apparatus of claim 61, wherein the seventh transmitting unit is used for:

transmitting, to the network device, the first reference measurement result and the first index and the second index associated with the reference signal resource corresponding to the first reference measurement result, and the second index associated with the reference signal resource corresponding to the first difference, and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

63. The apparatus of claim 48, wherein the first transmitting module comprises an eighth h measuring unit, an eighth h selecting unit, an eighth h processing unit and an eighth h transmitting unit, wherein

the eighth measuring unit is used for measuring the reference signal resources at different measurement time instances to obtain multiple measurement results;
the eighth selecting unit is used for selecting a first reference measurement result from the multiple measurement results; and selecting a second reference measurement result from second measurement time instances other than a first measurement time instance corresponding to the first reference measurement result;
the eighth processing unit is used for determining a first difference between each of the second reference measurement results and the first reference measurement result, determining, for each measurement time instance, a second difference between remaining measurement results other than the first reference measurement result and the first reference measurement result or a third difference between remaining measurement results other than the first difference and the first difference; and
the eighth transmitting unit is used for transmitting, to the network device, the first reference measurement result, a first index and a second index associated with a reference signal resource corresponding to the first reference measurement result, a first index and a second index associated with a reference signal resource corresponding to the first difference, and an index of a measurement time instance associated with a reference signal resource corresponding to the first reference measurement result and mapping the first difference, the second difference, and the third difference in a mapping order.

64. The apparatus of claim 63, wherein the eighth h transmitting unit is used for:

transmitting, to the network device, the first reference measurement result and the first index and the second index associated with the reference signal resource corresponding to the first reference measurement result, the first index and the second index associated with the reference signal resource corresponding to the first difference, and the index of the measurement time instance associated with the reference signal resource corresponding to the first reference measurement result and mapping the first difference, the second difference, and the third difference corresponding to each reference signal resource in a third order of indexes of measurement time instances, a first order of first indexes associated with reference signal resources corresponding to the first difference, the second difference, and the third difference, and a second order of second indexes associated with the reference signal resources corresponding to the first difference, the second difference and the third difference.

65. The apparatus of claim 49 or 51 or 53 or 55 or 57 or 59 or 61 or 63, wherein the first reference measurement result or the second reference measurement result comprises at least one of:

a largest value;
a smallest value;
a median value; or
an average value.

66. The apparatus of claim 50 or 52 or 54 or 56 or 58 or 60 or 62 or 64, wherein the first order or the second order comprises at least one of:

an ascending order;
a descending order;
an order configured by the network device; or
a given order.

67. The apparatus of any of claims 48 to 64, wherein the first indexes are indexes of reference signal resource sets, and the second indexes are indexes of reference signal resources; or
the first indexes are indexes of reference signal resources, and the second indexes are indexes of repetition numbers for reference signal resources.

68. The apparatus of any of claims 48 to 64, wherein the information to be reported indicated by the reporting configuration message is used to perform associated operations on an artificial intelligence model.

69. The apparatus of claim 48, wherein the associated operations on the artificial intelligence model comprise one or more of:

model training;
model inference;
model monitoring; or
model update.

70. An apparatus for information transmission, comprising:

a second transmitting module, used for transmitting a reporting configuration message to a terminal, wherein the reporting configuration message is used to indicate information to be reported; and
a receiving module, used for receiving the information to be reported indicated by the reporting configuration message transmitted from the terminal;
receiving the information to be reported indicated by the reporting configuration message transmitted from the terminal comprises:

receiving indexes associated with partial reference signal resources transmitted from the terminal, and sequentially receiving measurement results transmitted from the terminal; or

receiving first indexes and/or second indexes associated with the K reference signal resources transmitted from the terminal, wherein K is a positive integer; or

receiving an index of one or more reference signal resource set patterns or combinations transmitted from the terminal.

71. The apparatus of claim 70, wherein the first indexes are indexes of reference signal resource sets, and the second indexes are indexes of reference signal resources; or

the first indexes are indexes of reference signal resources, and the second indexes are indexes of repetition numbers for reference signal resources.

72. The apparatus of claim 70, further comprising a processing module, wherein

the processing module is used for performing associated operations on an artificial intelligence model based on reported information indicated by received reporting configuration message.

73. The apparatus of claim 72, wherein the associated operations on the artificial intelligence model comprise one or more of:

model training;
model inference;
model monitoring; or
model update.

74. A computer-readable storage medium, storing a computer program, wherein the computer program is used to cause a computer to perform the method of any one of claims 1 to 22.

75. A computer-readable storage medium, storing a computer program, wherein the computer program is used to cause a computer to perform the method of any one of claims 23 to 26.

| Obtain a reporting configuration message transmitted from a network device | 101 |

$\downarrow$

| Transmit information to be reported indicated by the reporting configuration message to the network device | 102 |

FIG. 1

| Transmit a reporting configuration message to a terminal, where the reporting configuration message is used to indicate information to be reported | 201 |

$\downarrow$

| Receive the information to be reported indicated by the reporting configuration message transmitted from the terminal | 202 |

FIG. 2

| Processor | 310 |
| Memory | 320 |
| Bus interface | |
| Transceiver | 300 |
| User interface | 330 |

FIG. 3

FIG. 4

FIG. 5

FIG. 6

## INTERNATIONAL SEARCH REPORT

| International application No. |
| --- |
| **PCT/CN2024/087184** |

**A. CLASSIFICATION OF SUBJECT MATTER**

H04W 24/02(2009.01)i

According to International Patent Classification (IPC) or to both national classification and IPC

**B. FIELDS SEARCHED**

Minimum documentation searched (classification system followed by classification symbols)

IPC: H04W 24/-

Documentation searched other than minimum documentation to the extent that such documents are included in the fields searched

Electronic data base consulted during the international search (name of data base and, where practicable, search terms used)

CNTXT, CNKI: 波束, 参考信号, 差量, 差值, 配置, 索引, 消息, 增量, 资源 ENTXT, VEN, WPABS, 3GPP: beam, configuration, difference, increment, index, resources, reference signal

**C. DOCUMENTS CONSIDERED TO BE RELEVANT**

| Category* | Citation of document, with indication, where appropriate, of the relevant passages | Relevant to claim No. |
| --- | --- | --- |
| X | CN 110035450 A (VIVO COMMUNICATION TECHNOLOGY CO., LTD.) 19 July 2019 (2019-07-19) description, paragraphs 45-282 | 1, 23, 27, 44, 48, 70, 74-75 |
| A | US 2019349784 A1 (HUAWEI TECHNOLOGIES CO., LTD.) 14 November 2019 (2019-11-14) entire document | 1-75 |
| A | ERICSSON. "R1-1714291, DL beam indication for periodic and aperiodic reference signals" *3GPP TSG-RAN WG1 #90*, 12 August 2017 (2017-08-12), entire document | 1-75 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 May 2024** | **28 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/087184**

| Patent document cited in search report | | | Publication date (day/month/year) | Patent family member(s) | | | Publication date (day/month/year) |
|---|---|---|---|---|---|---|---|
| CN | 110035450 | A | 19 July 2019 | JP | 2021519001 | A | 05 August 2021 |
| | | | | JP | 7403459 | B2 | 22 December 2023 |
| | | | | US | 2021076241 | A1 | 11 March 2021 |
| | | | | US | 11729651 | B2 | 15 August 2023 |
| | | | | KR | 20200097335 | A | 18 August 2020 |
| | | | | WO | 2019137477 | A1 | 18 July 2019 |
| | | | | KR | 20220025121 | A | 03 March 2022 |
| | | | | KR | 102557455 | B1 | 18 July 2023 |
| | | | | EP | 3739942 | A1 | 18 November 2020 |
| | | | | EP | 3739942 | A4 | 03 March 2021 |
| | | | | IN | 202027034581 | A | 02 October 2020 |
| | | | | CN | 110035450 | B | 23 June 2020 |
| US | 2019349784 | A1 | 14 November 2019 | US | 11051182 | B2 | 29 June 2021 |
| | | | | EP | 3567892 | A1 | 13 November 2019 |
| | | | | EP | 3567892 | A4 | 08 January 2020 |
| | | | | BR | 112019015303 | A2 | 17 March 2020 |
| | | | | WO | 2018137397 | A1 | 02 August 2018 |
| | | | | CN | 108365939 | A | 03 August 2018 |
| | | | | CN | 108365939 | B | 01 March 2024 |

Form PCT/ISA/210 (patent family annex) (July 2022)

**REFERENCES CITED IN THE DESCRIPTION**

**Patent documents cited in the description**

- CN 202310477293